# EUROPEAN PATENT APPLICATION

(11) **EP 1 020 748 A1**
(43) Date of publication of application: **19.07.2000**
(21) Application number: 98945562.1
(22) Date of filing: 01.10.1998
(51) Int. Cl.: G02B 6/43, G02B 6/122

(54) **OPTICAL INFORMATION PROCESSOR**

(30) Priority: 01.10.1997 JP 26900397; 01.10.1997 JP 26900497
(71) Applicant: Hitachi Chemical Company, Ltd., Tokyo 163-0449 (JP)
(72) Inventor: KUWANA, Yasuhiro Tsukuba Research Laboratory, Tsukuba-shi Ibaraki-ken 300-4247 (JP); HONDA, Yutaka Tsukuba Research Laboratory, Tsukuba-shi Ibaraki-ken 300-4247 (JP); MIYADERA, Nobuo Tsukuba Research Laboratory, Tsukuba-shi Ibaraki-ken 300-4247 (JP); TAKAHASHI, Toru Tsukuba Research Laboratory, Tsukuba-shi Ibaraki-ken 300-4247 (JP)
(74) Representative: Jönsson, Hans-Peter, Dr.Dipl.-Chem.
(86) International application number: JP9804432
(87) International publication number: WO9917142

(57) **Abstract**

The present invention provides an optical information processing apparatus, in which input/output signal of an electric circuit is converted into an optical signal by a light receiving/emitting element, so as to be transmitted through an optical waveguide, and alignment between the optical waveguide and the light receiving/emitting element is easy. The apparatus comprises a waveguide substrate 10 provided with the optical waveguide, and an electric circuit substrate 100 mounted on the waveguide substrate 10 such that the electric circuit substrate is opposed to the optical waveguide 14. Here, a photodetector 101 for receiving light propagated through the optical waveguide 14 is arranged in a portion under the optical waveguide 14, and an electric circuit of the electric circuit substrate 100 is connected to the photodetector 101.

## Description

### Technical Field

The present invention relates to an optical information processing apparatus in which an optical waveguide connects between integrated circuits in order to transmit a signal in the form of an optical signal.

### Background Art

A technique of optical interconnection (internal optical coupling), in which, in order to transmit and receive a signal between a plurality of integrated circuits, an electric signal is once converted into an optical signal and that optical signal is transmitted and received, is disclosed in a document, Jpn. J. Appl. Phys. Vol. 36 (1997) pp. 1903 - 1906. This document discloses structure in which an electric signal is propagated through an optical waveguide on a substrate. In this structure, a light emitting diode and a photodetector are provided in an LSI substrate for conversion between an electric signal and an optical signal, and this LSI substrate is mounted on a substrate in which an optical waveguide is formed.
The optical signal that propagates the optical waveguide is deflected into a perpendicular direction to the substrate surface by a micro mirror provided in the optical waveguide so as to be emitted from the optical waveguide. This optical signal is received by the photodetector on the LSI substrate. Further, an optical signal emitted from the light emitting diode toward the optical waveguide is deflected into the propagating direction in the optical waveguide by the micro mirror provided in the optical waveguide, so as to propagate through the optical waveguide.

Thus-described conventional system requires that the LSI substrate and the optical waveguide substrate are fixed while the light emitting diode and the photodetector on the LSI substrate are aligned with the micro mirror within the optical waveguide on the optical waveguide substrate.

### Disclosure of the Invention

An object of the present invention is to provide an optical information processing apparatus constructed such that an input/output signal of an electric circuit is converted into an optical signal and transmitted through the optical waveguide, and alignment between the optical waveguide and a light receiving/emitting element is easy.

In order to attain the above object, the present invention provides, as its first embodiment, a following optical information processing apparatus: namely,
the optical information processing apparatus comprising:
a waveguide substrate provided with an optical waveguide;
an electric circuit substrate mounted on the waveguide substrate such that the electric circuit substrate is opposed to the optical waveguide;
a photodetector for receiving light propagated through the optical waveguide arranged under the optical waveguide; and
an electric circuit of the electric circuit substrate connected to the photodetector.

In order to attain the above-mentioned object, the present invention provides, as its second embodiment, a following optical information processing apparatus; namely,
the optical information processing apparatus comprising:
a waveguide substrate provided with an optical waveguide;
an electric circuit substrate mounted on the waveguide substrate such that the electric circuit substrate is opposed to the optical waveguide; wherein:
the electric circuit substrate is provided with a photodetector, which is for receiving light propagated through the optical waveguide, and an electric circuit; and
at least a part of a space between the waveguide substrate and the electric circuit substrate is filled with resin.

### Brief Description of Drawings

Fig. 1 is a top view for explaining configuration of an optical waveguide and wiring on a substrate 10 of an optical information processing system according to a first embodiment of the present invention;
Fig. 2 is a block diagram showing arrangement of LSIs mounted on substrates 100, 111 and 112 in the optical information processing system of Fig. 1;
Fig. 3 is a cross section showing connecting structure between the substrate 10 and the substrates 100, etc. in the optical information processing system of Fig. 1;
Fig. 4 is an explanatory view showing deflection of propagated light in the optical waveguide 14 in the optical information processing system of Fig. 1;
Figs. 5A, 5B and 5C are block diagrams showing wiring on the substrates 100, 111 and 112 in the optical information processing system of Fig. 1;
Fig. 6 is an explanatory view showing flow of an optical signal in the optical information processing system of Fig. 1;
Fig. 7 is a cross section showing a step of fabricating the optical waveguide on the substrate 10 in the optical information processing system of Fig. 1;
Fig. 8 is a cross section showing a step of fabricating the optical waveguide on the substrate 10 in the optical information processing system of Fig. 1;
Fig. 9 is a cross section showing a step of fabricating the optical waveguide on the substrate 10 in the optical information processing system of Fig. 1;
Fig. 10 is a cross section showing a step of fabricating the optical waveguide on the substrate 10 in the optical information processing system of Fig. 1;

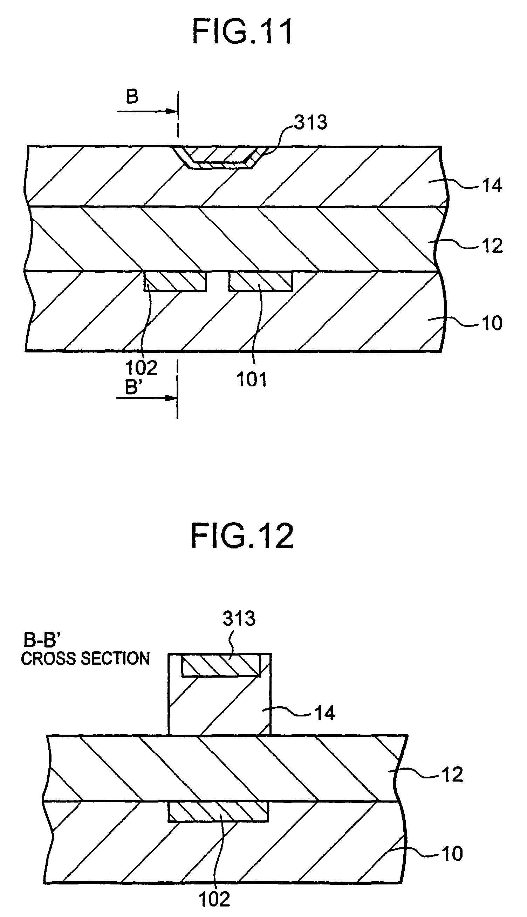

Fig. 11 is a cross section showing a step of fabricating the optical waveguide on the substrate 10 in the optical information processing system of Fig. 1;
Fig. 12 is a cross section taken along the line B - B' of Fig. 11;
Fig. 13 is a cross section showing an optical waveguide provided with a deflecting means of another construction in the first embodiment;
Fig. 14 is a cross section showing an optical waveguide provided with a deflecting means of another construction in the first embodiment;
Fig. 15 is a cross section showing an optical waveguide provided with a deflecting means of another construction in the first embodiment;
Fig. 16 is a cross section showing construction of an optical waveguide that receives an optical signal utilizing evanescent wave in the first embodiment;
Fig. 17 is an explanatory view showing a shape of an optical waveguide that can be used as the optical waveguide in the optical information processing system according to the first and a second embodiment;
Fig. 18 is an explanatory view showing a shape of an optical waveguide that can be used as the optical waveguide in the optical information processing system according to the first and second embodiments;
Fig. 19 is a cross section showing another example of connecting structure between the substrate 10 and the substrates 100, etc. in the optical information processing system of Fig. 1;
Fig. 20 is a cross section showing construction that the optical waveguide of the optical information processing system of Fig. 1 is provided with an upper clad;
Fig. 21 is a top view for explaining configuration of an optical waveguide and wiring on a substrate 10 of an optical information processing system according to the second embodiment of the present invention;
Fig. 22 is a block diagram showing arrangement of LSIs, photodetectors and light emitting diodes mounted on substrates 100, 111 and 112 in the optical information processing system of Fig. 21;
Fig. 23 is a cross section showing connecting structure between the substrate 10 and the substrates 100, etc. in the optical information processing system of Fig. 21;
Fig. 24 is an explanatory view showing deflection of propagated light in the optical waveguide 14 in the optical information processing system of Fig. 21;
Figs. 25A, 25B and 25C are block diagrams showing wiring on the substrates 100, 111 and 112 in the optical information processing system of Fig. 21;
Fig. 26 is an explanatory view showing flow of an optical signal in the optical information processing system of Fig. 21;
Fig. 27 is a cross section showing a step of fabricating the optical waveguide on the substrate 10 in the optical information processing system of Fig. 21;
Fig. 28 is a cross section showing a step of fabricating the optical waveguide on the substrate 10 in the optical information processing system of Fig. 21;
Fig. 29 is a cross section showing a step of fabricating the optical waveguide on the substrate 10 in the optical information processing system of Fig. 21;
Fig. 30 is a cross section showing a step of fabricating the optical waveguide on the substrate 10 in the optical information processing system of Fig. 21;
Fig. 31 is a cross section showing a step of fabricating the optical waveguide on the substrate 10 in the optical information processing system of Fig. 21;
Fig. 32 is a cross section showing a step of fabricating the optical waveguide on the substrate 10 in the optical information processing system of Fig. 21;
Fig. 33 is a cross section showing a step of fabricating the optical waveguide on the substrate 10 in the optical information processing system of Fig. 21;
Fig. 34 is a cross section taken along the line D - D' of Fig. 33;
Fig. 35 is a cross section showing construction in which a micro mirror is integrated with a line in the second embodiment;
Fig. 36 is a top view of Fig. 35;
Fig. 37 is a cross section showing another method of fabricating the micro mirror of the second embodiment;
Fig. 38 is a cross section showing that another method of fabricating the micro mirror of the second embodiment;
Fig. 39 is a cross section showing that another method of fabricating the micro mirror of the second embodiment;
Fig. 40 is a cross section showing that another method of fabricating the micro mirror of the second embodiment;
Fig. 41 is a cross section showing still another method of fabricating the micro mirror of the second embodiment;
Fig. 42 is a cross section showing that still another method of fabricating the micro mirror of the second embodiment;
Fig. 43 is a cross section showing construction in which an upper surface of the optical waveguide of the optical information processing apparatus of the second embodiment is made to be flat, and an upper clad is provided on it;
Fig. 44 is a cross section showing another example of connecting structure between the substrate 10 and the substrates 100, etc. in the optical information processing system of Fig. 21;
Fig. 45 is a cross section showing another example of connecting structure between the substrate 10 and the substrates 100, etc. in the optical information processing system of Fig. 21;
Fig. 46 is a cross section showing another example of connecting structure between the substrate 10 and the substrates 100, etc. in the optical information processing system of Fig. 21;
Fig. 47 is an explanatory view showing arrangement of a light emitting element 102 and an optical waveguide 14 in an information processing apparatus according to a third embodiment of the present invention;
Fig. 48 is an explanatory view showing arrangement of a photodetector 101 and an optical waveguide 14 in an information processing apparatus according to a fourth embodiment of the present invention.

### Best Mode for Carrying Out the Invention

A first embodiment of the present invention will be described referring to the drawings.

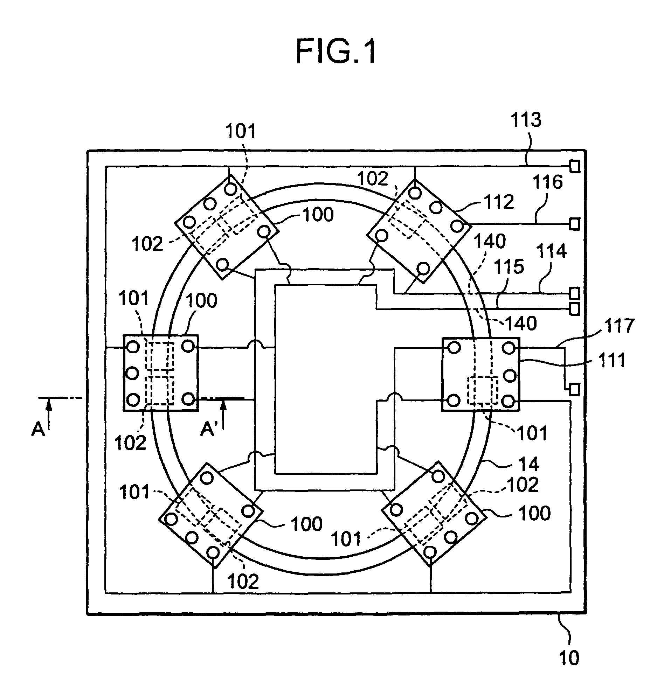

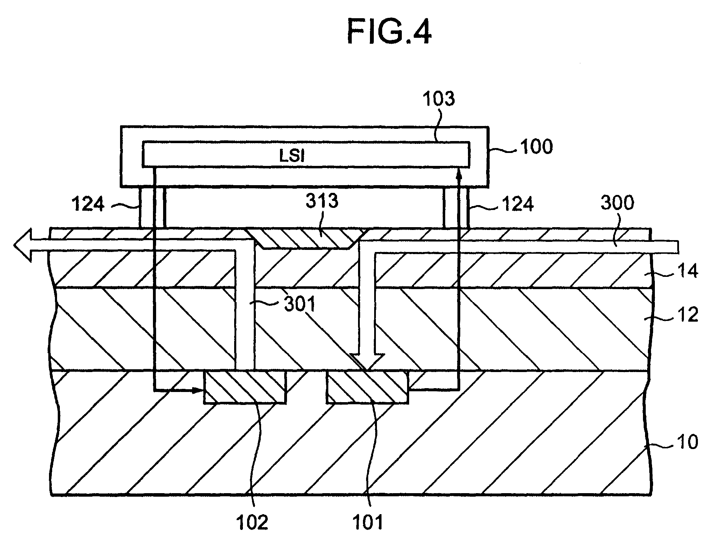

First, construction of the optical information processing system of the first embodiment will be described. As shown in Figs. 1 and 4, a ring-shaped optical waveguide 14 is formed on a silicon substrate 10. Further, in the silicon substrate 10, are arranged a photodetector 101 and a light emitting diode (which includes, in addition to LED, a light emitting element such as a laser diode) 102 next to each other at four points along the optical waveguide 14. Further, at another point, is placed a photodetector 101 by itself, and at still another point, a light emitting diode 102 by itself. These photodetectors 101 and light emitting diodes 102 have their light receiving/emitting surfaces in their upper surfaces. The optical waveguide 14 is formed with micro mirrors, each consisting of an aluminum film 313, at the six points where those photodetectors 101 and the light emitting diodes are placed (Fig. 4). Each micro mirror of the aluminum film 313 has two inclined surfaces along the light propagating direction in the optical waveguide 14. One of the inclined surfaces deflects a part 300 of propagated light downward, to enter it into the photodetector 101, and another of the inclined surfaces deflects light 301 emitted from the light emitting diode 102 into the propagating direction of the optical waveguide 14 so as to make the light be propagated through the optical waveguide 14.

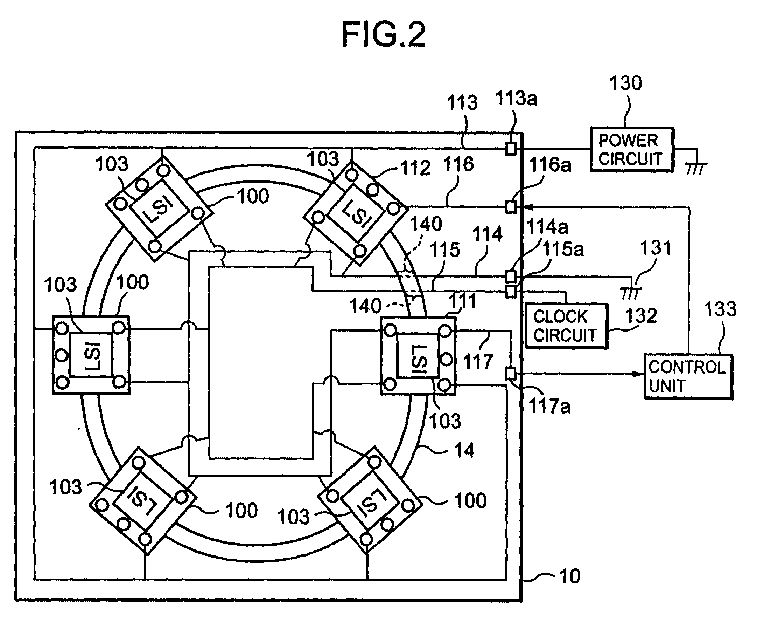

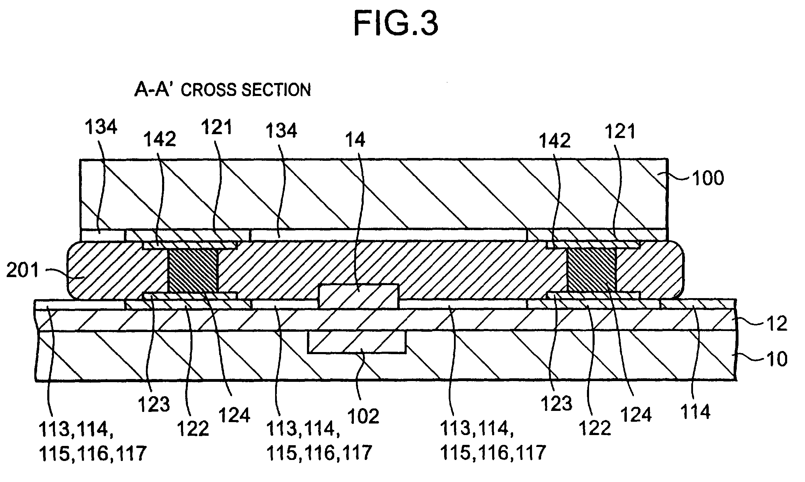

LSI substrates 100 are mounted respectively above the four points where the photodetector 101 and the light emitting diode 102 are placed next to each other (Fig. 3). Further, above the one point where only the photodetector 101 is placed, an LSI substrate 111 is mounted. Above the one point where only the light emitting diode 102 is placed, an LSI substrate 112 is mounted. Each of the LSI substrates 100, 111 and 112 is mounted with an LSI 103 as shown in Fig. 2.

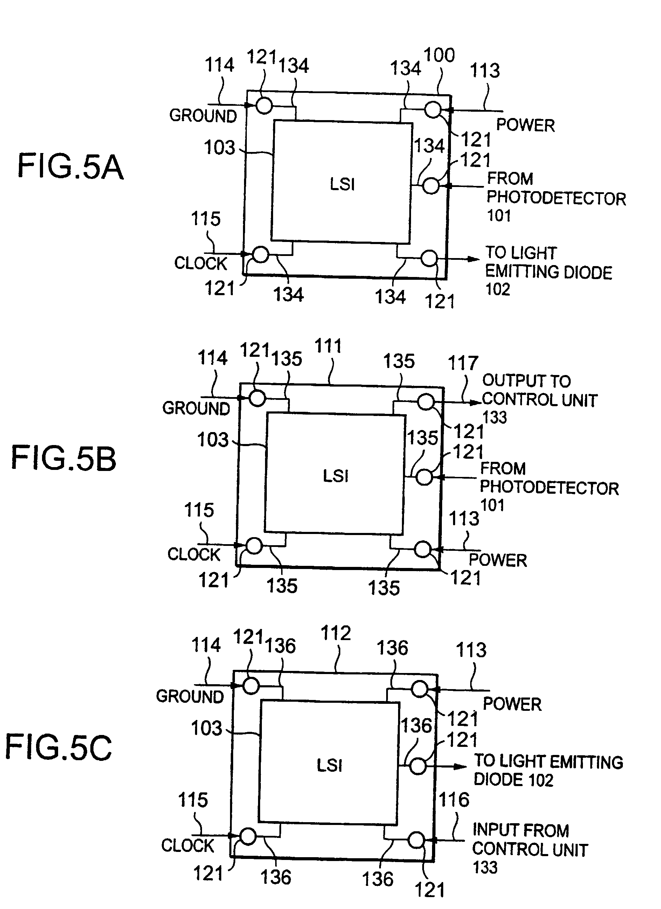

As shown in Figs. 5A, 5B and 5C, at peripheral portion of each LSI substrate 100, 111 or 112, aluminum pads 121 are formed at five points. Also, on the substrate 10, aluminum pads 122 are formed at positions opposed to the aluminum pads 121. These are connected by copper bumps 124 through chromium films 123 and electrically conductive adhesive layers 142 (Fig. 3). The chromium films 123 are provided to enhance the adhesive strength between the copper bumps 124 and the aluminum pads 122. Spaces between the substrate 10 and the LSI substrate 100, etc. are filled with resin 201, thus realizing sealing.

Further as shown in Figs. 1 and 2, on the substrate 10, are formed a power line 113, a ground lines 114, a clock signal line 115, and input/output signal lines 116, 117, in addition to the optical waveguide 14. The power line 113, the ground line 114 and the clock signal line 115 are each connected to a certain aluminum pad 122 under the substrate 100, etc. (Figs. 1 and 2). The power line 113, the ground line 114, the clock signal line 115 and the input/output signal lines 116, 117 are connected to a power circuit 130, ground 131, a clock circuit 132, and a control unit 133 through connecting pads 113a, 114a, 115a, 116a and 117a, respectively.

Although not shown, the substrate 10 is formed with wiring for connecting an output signal from the photodetector 101 and an input signal into the light emitting diode 102 to some of the aluminum pads 122 under the substrate 100 etc. positioned above correspondingly to them.

Further, the input signal line 116 is connected to the aluminum pad 122 under the substrate 112, and the output signal line 117 to the aluminum pad 122 under the substrate 111.

Thus, power, ground voltage, a clock signal, and the input/output signal are supplied to the substrates 100, 111 and 112 through the copper bumps 124, and then, supplied to the LSIs 103 through lines 134, 135 and 136 of the substrates 100, 111 and 112 (Figs. 5A, 5B and 5C). Further, connection between the LSI 103 and the photodetector 101 and connection between the LSI 103 and the light emitting diode 102 are realized through the copper bumps 124 and the lines 134, 135 and 136.

Further, drive voltage to the photodetectors 101 and the light emitting diodes is supplied from the power line 113 and the ground line 114 through lines (not shown) formed on the substrate 10.

Here, although schematic wiring paths are shown in Figs. 1, 2, 5A, 5B and 5C, for the sake of easy understanding of the paths of the line 113 etc. on the substrate 10. However, practical wiring paths are decided in view of effectiveness.

As shown in Fig. 4, in the optical information processing system of the first embodiment, the photodetectors 101 and the light emitting diodes 102 are not mounted on the LSI substrate 100 etc., but arranged in the position under the optical waveguide 14 (here, the position under the optical waveguide 14 includes not only the position between the optical waveguide 14 and the substrate 10, but also the position the inside of the substrate 10 and even the position under the substrate 10). And light propagated through the optical waveguide 14 is deflected downward by the micro mirror of the aluminum film 313 formed in the optical waveguide 14 and received by the photodetector 101. Further, light emitted from the light emitting diode 102 is deflected by the micro mirror to be propagated through the optical waveguide 14. This construction has integral structure in which the photodetectors 101, the light emitting diodes 102, and the optical waveguide 14 are arranged on the substrate 10, thus making it easy to align the photodetectors 101 and the light emitting diodes 102 with the optical waveguide 14. Further, distances from the photodetectors and light emitting diodes to the optical waveguide 14 can be smaller, and accordingly, efficiency of receiving light deflected by the micro mirror becomes higher and light leakage can be decreased. Further, a photodetector 101 and a light emitting diode 102 are not mounted on the substrate 100, 111 and 112, which are mounted on the substrate 10, and it is not necessary to form lines connected to such elements on the substrate 100, etc. Accordingly, it is possible to have a larger space for mounting the LSI 103 on the substrate 100 etc., and more arithmetic circuits and storage circuits can be mounted.

Next, manufacturing steps for forming the optical waveguide 14 and the micro mirrors of aluminum films 313 will be described.

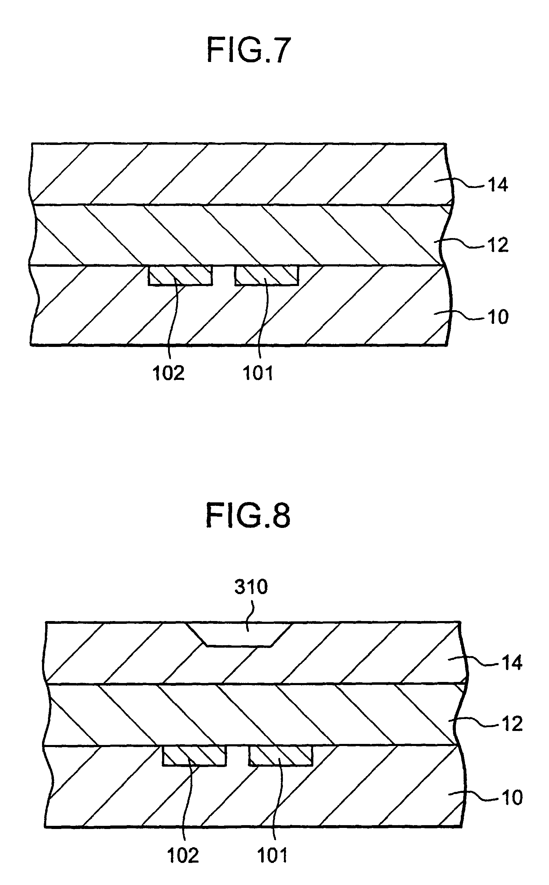

First, as shown in Fig. 7, a lower clad 12 of SiO₂ layer of 1.2 µm in thickness is formed on the silicon substrate 10 in which the photodetectors 101, the light emitting diodes 102, the lines 113, 114, 115, etc., the aluminum pads 122, etc. are arranged. This lower clad 12 of SiO₂ layer is formed by plasma CVD of the TEOS (tetraethoxysilane)/O₂ reaction system. Thereafter, the surface of the lower clad 12 is coated with the OPI coupler made by Hitachi Chemical Co., Ltd., so as to form a very thin organic molecular coat of the OPI coupler on the order of molecule in thickness. Such organic molecular coat of the OPI coupler is formed in order to improve adhesion strength between the optical waveguide 14 of polyimide and the lower clad 12. Then, after OPI-N2005 made by Hitachi Chemical Co., Ltd. is coated and baked to form a polyimide layer of a desired thickness, dry etching is carried out to etch it into the shape of a ridge-type waveguide, so that the optical waveguide 14 of polyimide is formed (Fig. 7).

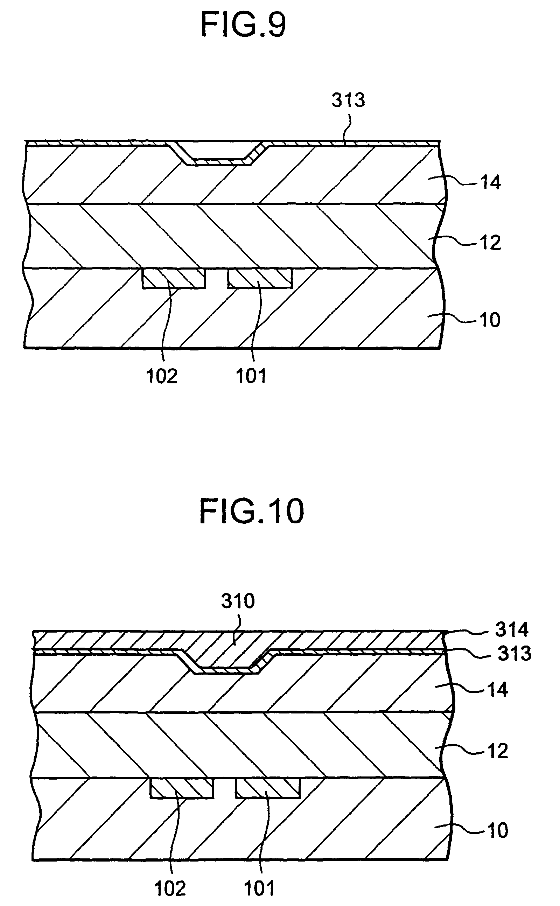

Next, laser ablation is employed to form a wedge-shaped notch 310 in the upper portion of the optical waveguide 14 (Fig. 8), and then, an aluminum film 313 is formed all over the surface by sputtering (Fig. 9). Again, OPI-N2005 is coated and baked, to form a polyimide layer 314 that fills the wedge-shaped notch 310. Thereafter, etchback is carried out to such a degree that the upper surface of the optical waveguide 14 is exposed, so that the aluminum film 313 is left only in the portion of the wedge-shaped notch 310. This completes the optical waveguide 14 provided with the micro mirror of the aluminum film 313 for deflecting propagated light downward.

Then, the lower clad 12 is etched to expose the aluminum pads 122, and after forming chromium films 123 on the aluminum pads 122, copper bumps 124 of 30 µm in height are formed by plating. Then, an electrically conductive adhesive layer 142 of silver paste is formed to fix the substrates 100, 111 and 112, which have been fabricated separately and are mounted with LSIs 103, aligning them with the substrate 10 using transmitted infrared ray. Liquid of resin raw material is dropped into spaces between the fixed substrates 100, 111, 112 and the substrate 10, injected into them utilizing the capillary phenomenon, and heated for curing, so as to form the resin 201. As the resin raw material, liquid obtained by mixing 100 parts by weight of glycidyl methacrylate and 1 part by weight of azobisisobutyronitrile can be used. In the case of this resin raw material, heating at 100°C for 30 minutes for curing can lead to formation of the resin 201.

In the present embodiment, the aluminum film 313 is used for constructing the micro mirror. However, a film of another metal such as Cr, Cu, Au, Ag or the like may be used, of course. Further, other than a metal film, a dielectric film that reflects propagated light may be used.

Next, operation of the optical information processing system of the first embodiment will be described.

Each of the LSIs 103 on the four substrates 100 converts all the signals to be sent to and received from the LSIs 103 on the other substrates 100, 111 and 112 into optical signals by means of the photodetector 101 and the light emitting diode 102 placed under the optical waveguide 14, and sends and receives the converted signals through the optical waveguide 14. Here, however, a light emitting diode is not placed under the substrate 111, and therefore, with the aid of the photodetector 101, the LSI 103 of the substrate 111 can receive an optical signal from the other substrates 100 and 112 through the optical waveguide 14, but the result of processing the received signal is delivered in the form of an electric signal itself to the control unit 133. Further, a photodetector is not placed under the substrate 111, and therefore, the LSI 103 of the substrate 111 receives a signal in the form of an electric signal from the control unit 133. After processing the received signal, the result is converted into an optical signal by means of the light emitting diode 102 and outputted into the LSIs 103 of the other substrates 100 and 111. An electric signal is received and sent to the control unit 133, through the copper bumps 124, and the signal lines 116, 117 on the substrate 10.

In the present embodiment, the LSI 103 of the substrate 100 comprises a selection circuit, an arithmetic circuit, and a signal output circuit. The selection circuit selects only a signal sent to itself out of signals received by the photodetector 101. The arithmetic circuit carries out predetermined operation using the signal selected by the selection circuit. And, the signal output circuit creates a signal that is the result of the arithmetic circuit, added with a destination signal indicating the LSI 103 on the substrate 111, and then makes the light emitting diode 102 output is as an optical signal.

Further, the LSI 103 of the substrate 112 comprises an information dividing circuit and a signal output circuit. This information dividing circuit receives information to be processed, from the control unit 133, divides the information into four pieces of information, and assigns them to the LSIs of the four substrates 100, one by one. The signal output circuit creates signals that are the divided pieces of information added with respective destination signals indicating assigned destinations, and makes the light emitting diode 102 output them as optical signals.

The LSI 103 of the substrate 111 comprises a selection circuit and an output circuit. The selection circuit selects only a signal sent to itself out of signals received by the photodetector 101. The output circuit synthesizes received signals to output the result to the control unit 133.

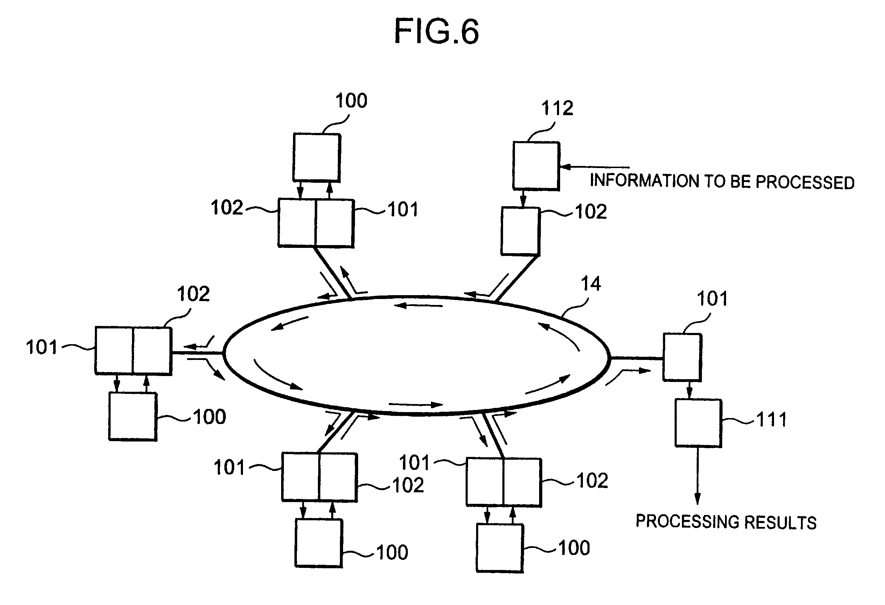

These operations will be described in detail. As shown in Fig. 6, the LSI 103 of the substrate 112 receives information to be processed, as an electric signal from the control unit 133. The information dividing circuit of the LSI 103 of the substrate 112 divides the received information into four pieces of information, and decides substrates 100 to which the divided pieces of information are assigned one by one. The signal output circuit of the LSI 103 of the substrate 112 creates signals comprising the four pieces of information which are respectively added with destination signals specifying assigned substrates 100, and makes the light emitting diode 102 under the substrate 112 output them as optical signals. The light emitted from the light emitting diode 102 under the substrate 112 is deflected by the micro mirror of the aluminum film 313 under the substrate 112, so that it becomes light to be propagated in the optical waveguide 14 and will be propagated through the optical waveguide 14.

The optical signals of the four pieces of information are each propagated through the optical waveguide. When they arrive at the position under the substrate 100 closest to the substrate 112, a part of the propagated light is deflected downward by the micro mirror of the aluminum film 313, as shown in Fig. 4, received by the photodetector 101 under the micro mirror, converted into electric signals, and delivered to the LSI 103 of the substrate 100. The selection circuit of the LSI 103 of the substrate 100 selects only a signal of the information destined for itself out of the received electric signals, and the arithmetic circuit processes the information. Then, the signal output circuit creates a signal by adding a destination signal indicating the LSI 103 of the substrate 111 to the result of the processing, and makes the light emitting diode 102 under the substrate 100 output it as an optical signal. The light emitted from the light emitting diode 102 under the substrate 100 is deflected by the micro mirror of the aluminum film 313 above the light emitting diode 102, so that it becomes light to be propagated in the optical waveguide 14 and will be propagated through the optical waveguide 14.

Similarly, also under another substrate 100, a part of light propagated through the optical waveguide 14 is deflected by the micro mirror, so that it is received by the photodetector under the substrate 100, and delivered to the LSI 103 of that substrate 100. The LSI 103 of that substrate 100 selects only a signal of the information destined for itself out of the received signals, processes the signal, creates a signal by adding a destination signal indicating the LSI 103 of the substrate 111 to the result of the processing, and makes the light emitting diode 102 under that substrate 100 output it as an optical signal. This optical signal becomes light to be propagated in the optical waveguide 14 and will be propagated through the optical waveguide 14.

Also, under the substrate 111, a part of the light propagated through the optical waveguide 14 is deflected by the micro mirror of the aluminum film 313, received by the photodetector 101 under the substrate 111, and delivered to the LSI 103 of the substrate 111. The selection circuit of the LSI 103 of the substrate 111 selects only the signals of the information destined for itself out of the delivered signals, so that it receives the respective results of processing by the LSIs 103 of the four substrates 100. A desired result of processing is obtained by synthesizing those results, and the output circuit delivers it as an electric signal to the control unit 133.

As described above, the optical information processing system according to the present embodiment employs the ring-shaped optical waveguide 14, and thus, information circulates through the optical waveguide 14, making a loop. Accordingly, information outputted from a certain substrate can be received by all the substrate, always. Thus, advantageously, it is not necessary to connect the LSI substrates 100, 111 and 112 one to one through optical waveguides, and signals can be sent and received between all the LSI substrates 100, 111 and 112 with one optical waveguide 14. Accordingly, it is not necessary to construct a complex optical waveguide network. Further, the present embodiment is furnished with the six substrates 100, 111 and 112. However, when contents of information processing are changed and an additional substrate is required, that substrate to be added may simply be mounted on an appropriate position above the optical waveguide 14, so that it is possible to send and receive information to and from any other substrates. Thus, contents of information processing can easily be changed without reconstructing the path of the optical waveguide 14. In that case, however, it is necessary that a photodetector 101, a light emitting diode 102, a micro mirror, aluminum pads 122, etc. be provided in the position corresponding to the substrate to be added. Thus, it is desirable that, previously in the stage of manufacturing the optical waveguide 14 on the substrate 10, photodetectors 101, light emitting diodes 102, micro mirrors, aluminum pads 122, etc. are provided in all the positions to which substrates may be added. In that case, also a micro mirror located at a position in which a substrate is not placed deflects a part of the propagated light, causing loss of light. However, it is not a problem when output light intensity of the light emitting diodes 102 is set to be sufficiently large.

Here, with respect to the operation of the optical processing apparatus, is shown the construction where the LSI substrate 112 receives information to be processed as an electric signal, the LSI substrates 100 process it in a distributed manner, and the LSI substrate 111 synthesizes the processing results and outputs the synthesized result. The present invention, however, is not limited to this construction, and of course, can employ a construction where the LSI substrates 100 send and receive processing results between them. Further, instead of receiving the information to be processed as an electric signal from the outside, may be employed a construction where information is received as an optical signal from an optical waveguide connected to the optical waveguide 14, or a construction where the processing result is outputted as an optical signal to the outside. Thus, when all pieces of information to be inputted and outputted are optical signals, then, instead of employing substrates such as the LSI substrates 111, 112 in which information is inputted and outputted as electric signals, all the LSI substrates may be constructed such that each of them is provided with a light emitting diode 102 and a photodetector 101 such as the substrates 100.

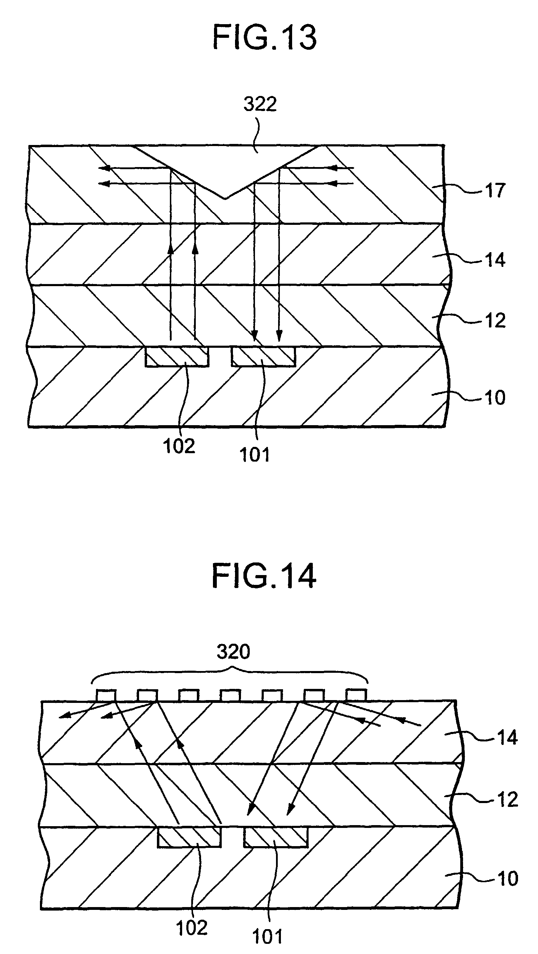

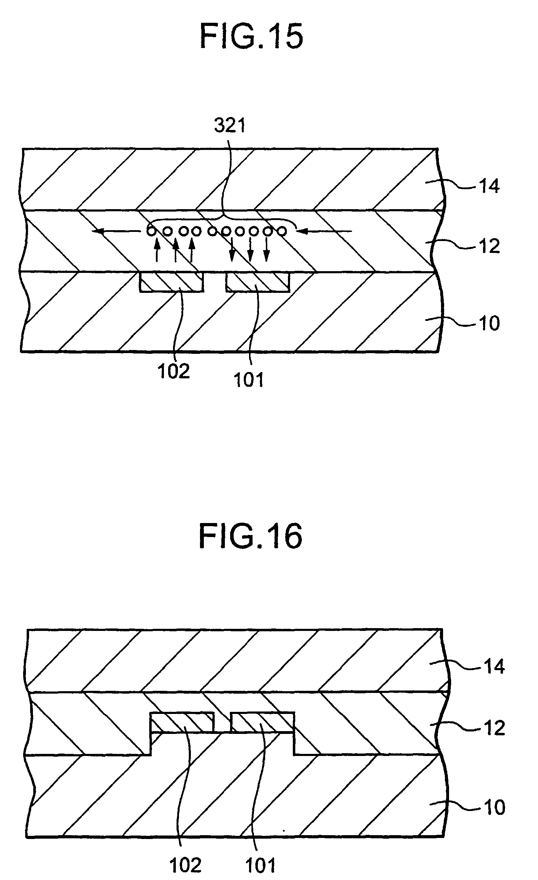

Further, the present embodiment uses the micro mirror of the aluminum film 313 as means for deflecting propagated light downward. However, the present invention is not limited to this micro mirror, and may employ means which can deflect at least a part of the propagated light or evanescent wave toward the photodetector 101 by reflecting or scattering it. For example, as shown in Fig. 13, a construction provided with a wedge-shaped notch 322 in the upper clad layer 17 may be used as a deflecting means, in order to deflect an evanescent wave propagated through the upper clad 17 by reflecting it. The wedge-shaped notch may be an air space, or may be filled with metal or a dielectric. Further, as shown in Fig. 14, a construction in which a grating 320 that deflects the propagated light is mounted on the optical waveguide 14 may be used as a deflecting means. The grating 320 may be provided not only on the optical waveguide 320, but also within the lower or upper clad 12 or 17, to have a construction that deflects an evanescent wave. Further, as shown in Fig. 15, a scattering center 321 may be formed by mixing beads of a different refractive index within the lower clad 12 or the upper clad, or by forming defects such as voids in the lower clad 12 or upper clad itself, in order to be used as a deflecting means. The scattering center 321 reflects a part of the evanescent wave, and therefore, that part of the evanescent wave can be received by the photodetector 101. Further, similarly, when light emitted from the light emitting diode 102 is scattered by the scattering center 321, a part of the light is deflected into the propagation direction and propagated. Further, in addition to utilization of scattering, the following means or the like may be employed for example. Namely. when the optical waveguide 14 is designed such that light propagation efficiency decreases above the photodetector 101 for example by changing the refractive index of the optical waveguide 14, it is also possible for the photodetector to receive light leaking from the optical waveguide 14.

Further, without providing a particular deflecting means, the photodetector 101 and the light emitting diode 102 may be projected toward the optical waveguide 14 as shown in Fig. 16, with their light receiving and emitting surfaces being placed inside the evanescent area of the optical waveguide 14, so that the evanescent wave entering the light receiving surface can be received, and a part of light emitted from the light emitting surface can be propagated.

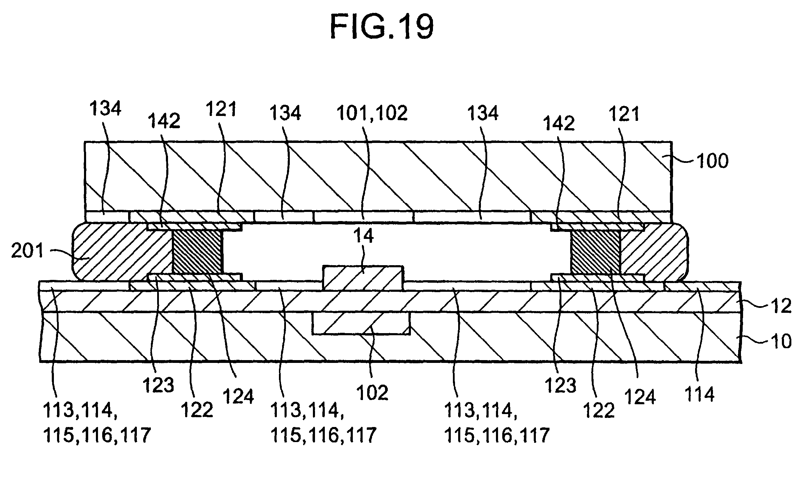

Further, the space between the substrate 10 and the LSI substrate 100, 111 or 112 is all filled with the resin 201 as shown in Fig. 3. However, as shown in Fig. 19, it is possible to employ structure in which only the periphery of the substrate 100 etc. is filled with the resin to separate the inside space from the outside air. The resin 201 of the structure of Fig. 19 can be formed by a method in which a room temperature curing two-part epoxy adhesive is dropped into the space portion in the periphery between the substrates (the portion of the resin 201 in Fig. 9, and cured at room temperature a whole day and night.

Further, it is not always necessary that the spaces between the substrate 10 and the LSI substrate 100, etc. be sealed with resin, and, after connection by the copper bumps 124, the spaces may be left as they are.

Further, the resin 201 in the construction of Fig. 3 may be formed by another method than the above-described fabricating method. For example, first, the periphery of the substrate 100, etc. is sealed except for a portion that becomes a sealing port later, with an epoxy adhesive or the like, similarly to the resin 201 of Fig. 19. Thereafter, the inside space is lightly evacuated through the sealing port, to fill a liquid mixture of 100 parts by weight of glycidyl methacrylate and 1 part by weight of azobisisobutyronitrile into the space through the sealing port, utilizing vacuum. Then, it is cured at 100°C for 30 minutes. This method can also form the resin 201 of the construction of Fig. 3.

According to both constructions of Figs. 3 and 19, adhesive strength between the substrate 10 and the substrate 100, or the like can be improved, and, at the same time, it is possible to improve the force of maintaining the distance between the substrate 10 and the substrate 100, or the like. Accordingly, reliability of the structure on the substrate 10 can be improved.

Further, in the construction of Fig. 3, by using a resin having a refractive index that can make it a clad layer of the optical waveguide 14 (namely, a refractive index lower than the optical waveguide 14), the resin 201 can serve also as the upper clad layer for the optical waveguide 14.

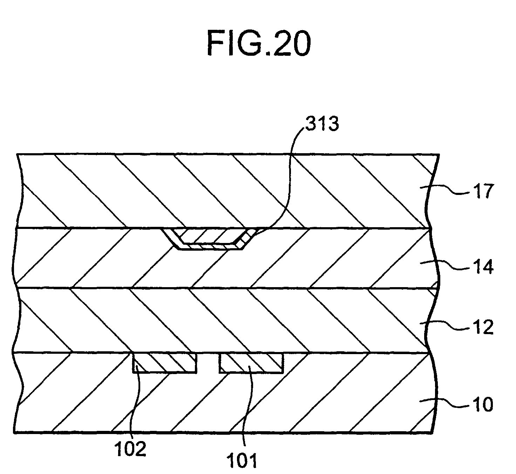

The above-described optical waveguide of the present embodiment has the construction in which air is utilized as the upper clad. However, as shown in Fig. 20, it is possible to employ construction in which an upper clad 17 is provided. As the upper clad 17, may be used an SiO₂ film formed by sputtering or the like, or an organic resin layer such as a polyimide layer formed by coating and baking OPI-N1005 made by Hitachi Chemical Co., Ltd.

The above-described optical information processing apparatus of the first embodiment has the lines 113, etc. on the substrate 10, and thus, is advantageous in that the step of forming the line 113 can be carried out at the same time with the step of arranging the photodetector 101 and the light emitting diode 102 on the substrate 10.

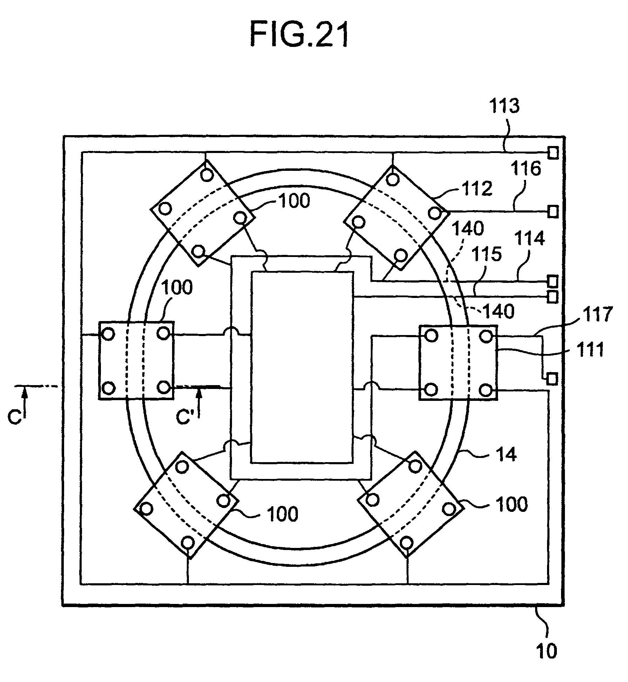

Next, a second embodiment of the present invention will be described. In the second embodiment, the photodetectors 101 and the light emitting diodes 102 are not arranged under the optical waveguide 14, but are mounted together with the LSIs 103 on the substrates 100, 111 and 112 above the optical waveguide 14. Then, resin 201, etc. is filled between the substrate 10 and the substrates 100, 111 and 112(Fig. 21 to Fig. 24).

The construction of the optical information processing system of the second embodiment will be described. Here, description about the parts of similar construction to the optical information processing system of the first embodiment will be omitted.

The substrate 10 is arranged thereon with a ring-shaped optical waveguide 14 similarly to the first embodiment, and six substrates 100, 111 and 112 are arranged on the substrate 10, along the optical waveguide 14 (Fig. 21).

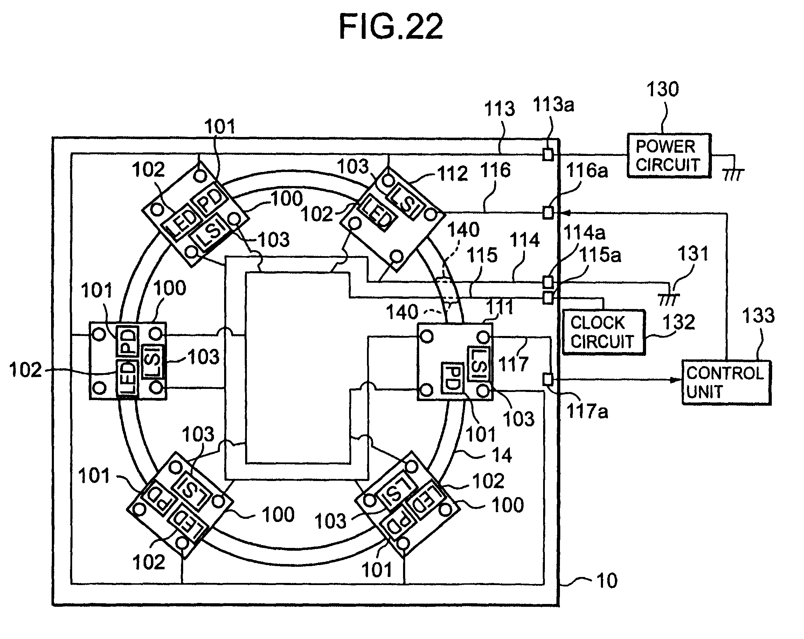

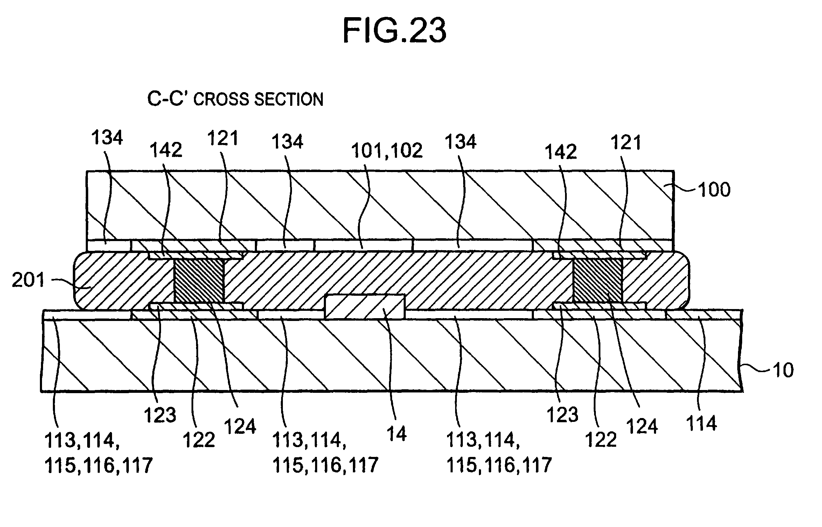

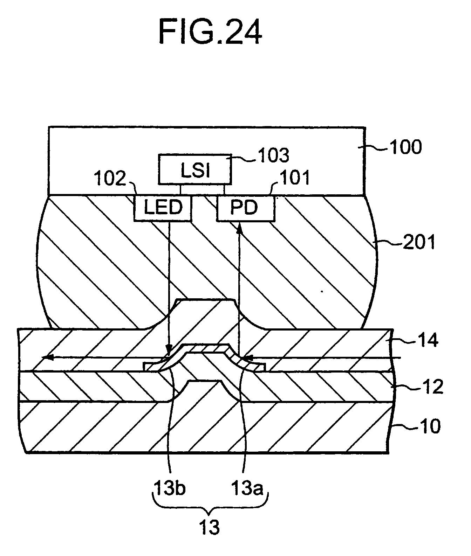

As shown in Fig. 22, four LSI substrates 100 are each mounted with a light emitting diode 102, a photodetector 101, and an LSI 103. Further, the LSI substrate 111 is not mounted with a light emitting diode, but with a photodetector 101 and an LSI 103. The LSI substrate 112 is not mounted with a photodetector, but with a light emitting diode 102 and an LSI 103. As shown in Figs. 23 and 24, each of the light emitting diodes 102 and the photodetectors 101 is mounted on the substrate 100, 111 or 112 such that its light receiving/emitting surface is located just above the optical waveguide 14 and the light receiving/emitting surface faces the optical waveguide 14.

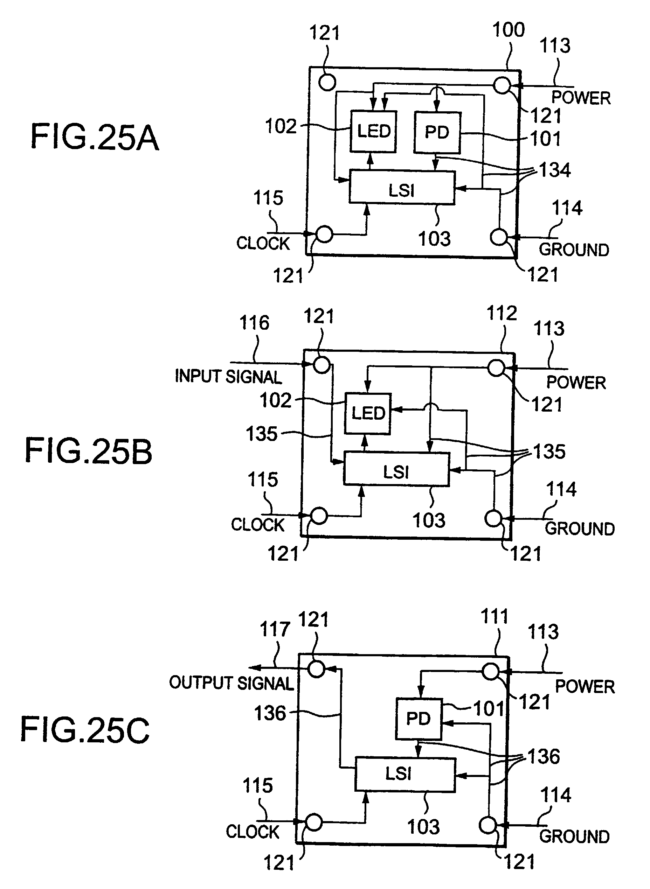

Each LSI substrate 100 is arranged with lines 134 for supplying the power-supply voltage and the ground voltage to the light emitting diode 102, the photodetector 101 and the LSI 103 and for inputting the clock signal to the LSI 103, through the copper bumps 124 (Fig. 25A). Further, a line 134 for inputting the output of the photodetector 101 to the LSI 103 and a line 134 for inputting the output of the LSI to the light emitting diode 102 are arranged.

Similarly, on the LSI substrate 112, is formed lines 135 for supplying the power-supply voltage and the ground voltage to the light emitting diode 102 and the LSI 103 and for inputting the clock signal to the LSI (Fig. 25B). Further, since the substrate 112 is not mounted with a photodetector, a line 135 for inputting an input signal from the external control unit 133 to the LSI 103 is arranged, also. Also, the LSI substrate 111 is formed with lines 136 for supplying the power-supply voltage and the ground voltage to the photodetector 101 and the LSI 103 and for inputting the clock signal to the LSI 103 (Fig. 25C). Further, since the substrate 111 is not mounted with a light emitting element, there is also arranged a line 136 for outputting the output signal of the LSI 103 to the external control unit 133.

The power line 113, the ground line 114, and the clock signal line 115 on the substrate 10 are respectively connected to some aluminum pads 122 in the four corners under each of the substrates 100, 111 and 112. Further, the input signal line 116 is connected to the aluminum pad 122 under the substrate 112, and the output signal line 117 is connected to the aluminum pad 122 under the substrate 111. Thus, power, ground voltage, clock signal and input/output signals are supplied to the substrates 100, 111 and 112 through the copper bumps 124 and the aluminum pads 121. Further, although not shown in Figs. 21 and 23, a protective coat is formed on the line 113, etc.

Further, the optical waveguide 14 is provided with micro mirrors of the aluminum films 13 in the positions opposed to the six substrates 100, 111 and 112 (Fig. 24). Each of these micro mirrors has two inclined surfaces 13a, 13b along the propagation direction of light in the optical waveguide 14, and deflects a part of the propagated light upward from the substrate 10 by means of one inclined surface 13a. Further, the other inclined surface 13b deflects the light emitted from the light emitting diode 102 in the propagating direction of the optical waveguide 14, so that the light is propagated through the optical waveguide 14.

In the present invention, the spaces between the substrate 10 and the substrates 100, 111 and 112 are filled with the resin 201, and accordingly, light emitted from the light emitting diode 102 permeates the resin 201 and arrives at the optical waveguide 14 (Figs. 23 and 24). Further, also light that is propagated through the optical waveguide 14 and deflected by the micro mirror of the aluminum film 13, permeates the resin 201 and arrives at the photodetector 101. Thus, as the resin 201, it is necessary to use a resin permeable to the light emitted from the light emitting diode 102 and the light propagated through the optical waveguide.

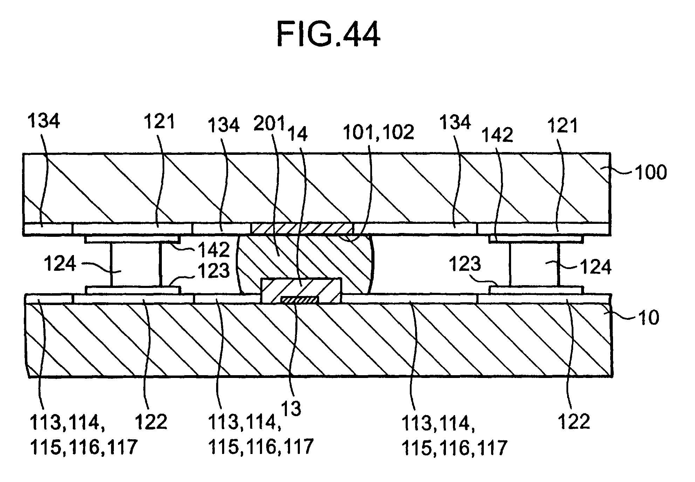

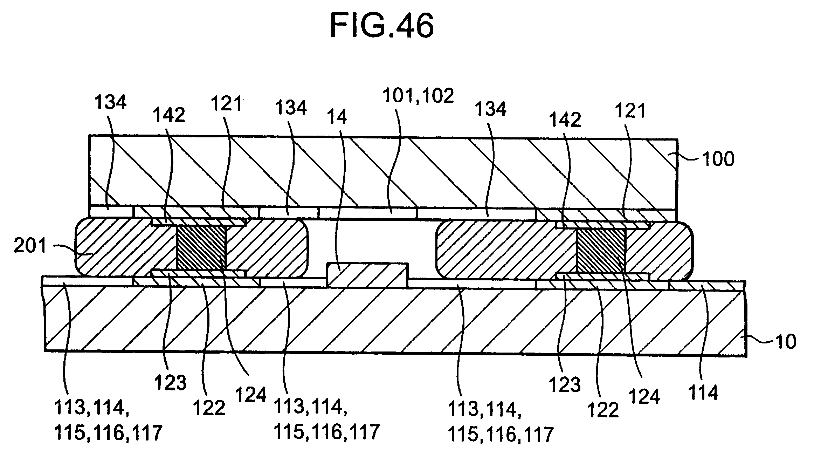

In Fig. 23, the space between the substrate 10 and the LSI substrate 100, 111 or 112 is all filed with the resin 201. However, the following construction may be employed. Namely, as shown in Fig. 44, only the spaces between the light receiving/emitting surfaces of the photodetector 101 and the light emitting diode 102 and the optical waveguide 14 may be filled. Or, as shown in Fig. 46, the space between the substrate 10 and the LSI substrate 100, 111 or 112 may be all filled with the resin, leaving the space between the light receiving/emitting surfaces of the photodetector 101 and the light emitting diode 102 and the optical waveguide 14.

Any of the constructions of Figs. 22, 44, 45 and 46 can separate the light receiving/emitting surfaces of the photodetector 101 and the light emitting element 102 and the upper surface of the optical waveguide from the outside air. Thus, it is possible to prevent deterioration of the light receiving/emitting surfaces and the optical waveguide owing to moisture and the like. Further, it is possible to improve the adhesive strength between the substrate 10 and the substrate 100 or the like, and at the same time, it is possible to improve the force of maintaining the distance between the substrate 10 and the substrate 100 or the like. Accordingly, reliability of the structure on the substrate 10 can be improved.

Further, as the resin 201 in the construction of Fig. 44, by using a resin having a refractive index that can make it a clad layer of the optical waveguide 14 (namely, a refractive index lower than the optical waveguide 14), the resin 201 can serve also as the upper clad layer for the optical waveguide 14. Further, in the case of the construction of Fig. 44, the resin 201 becomes a guide for light that goes or comes between the light receiving/emitting surface and the optical waveguide 14. Accordingly, light deflected upward out of the propagated light through the optical waveguide 14 can be confined in the resin 201 and delivered to the light receiving surface of the photodetector 101. Further, light emitted from the light emitting diode 102 can be confined in the resin 201 and delivered to the optical waveguide 14. Thus, light delivery efficiency can be improved.

Further, according to the constructions of Figs. 23, 45 and 46, the lines 113, 134, etc. and the copper bumps 134 etc. that lie in the portions where the substrate 10 and the substrate 100 or the like are opposed to each other can be separated from the outside air. Accordingly, electric reliability of the construction of the substrate 10 can be improved.

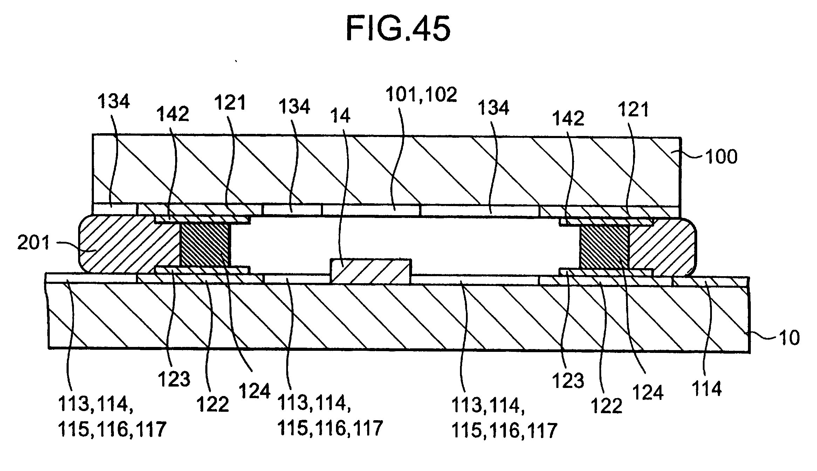

Further, in the constructions of Figs. 45 and 46, the resin 201 is not filled in the space between the light receiving/emitting surface and the optical waveguide, and thus, the refractive index and light transmittance of the resin do not matter. Accordingly, the constructions of Figs. 45 and 46 are advantageous in that a choice of resin is wide.

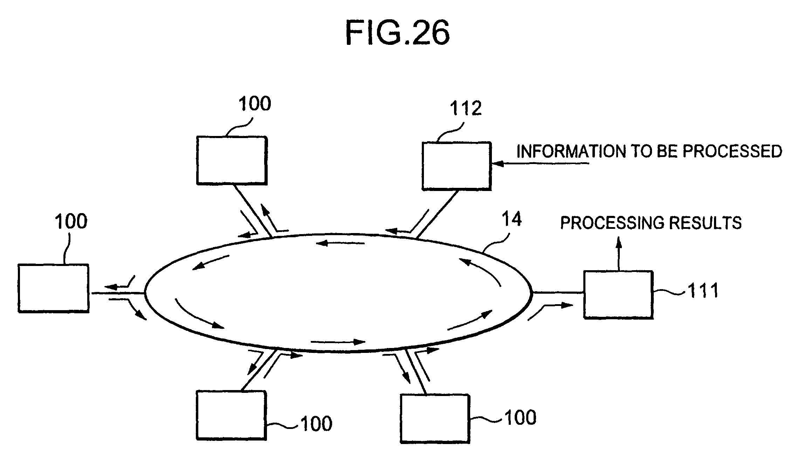

Operation of the optical information processing system of the second embodiment will be described briefly. Since the photodetectors 101 and the light emitting elements 102 are mounted on the substrates 100, 111 and 112, an optical signal is delivered between the optical waveguide 14 and the substrate 100, 111 or 112, as shown in Fig. 26. The power-supply voltage from the power circuit 130 is supplied through the connecting pad 113a, the power line 113, and the aluminum pads 122 on the substrate 10, and thereafter the copper bumps 124, reaching the six LSI substrates 100, 111 and 112, and being supplied to the light emitting diodes 102, the photodetectors 101 and the LSIs 103 through the lines 134, 135 and 136 on these substrates 100, 111 and 112. Similarly, also the ground voltage is supplied through the connecting pad 114, the ground line 114 and the aluminum pads 122 on the substrate 10, and the copper bumps 124, the aluminum pads 121, and the lines 134, 135 and 136, being supplied to the light emitting diodes 102, the photodetectors 101, and the LSIs 103. Also, the clock signal outputted from the clock circuit 132 is supplied to the LSIs 103 through the clock signal line 115 on the substrate and the copper bumps 134, etc. Supply of these power-supply voltage and the ground voltage makes it possible for the light emitting diodes 102 and the photodetectors 101 to emit and receive light. Further, those voltages make the operation of the LSIs 103 possible.

Each of the LSIs 103 on the four substrate 100 is connected to the photodetector 101 and the light emitting diode 102, and thus, converts each signal to be sent to and received from the LSI 103 of other substrate 100, 111 or 112 in the form of an optical signal, to send and receive it through the optical waveguide 14. However, the substrate 111 is not mounted with a light emitting diode, and therefore, although the LSI 103 of the substrate 111 can utilize the photodetector 101 for receiving an optical signal from the LSI 103 on other substrate 100 or 112 through the optical waveguide 14, it delivers the result of processing the received signal as the electric signal itself to the control unit 133. Further, the substrate 111 is not mounted with a photodetector. Thus, after the LSI 103 of the substrate 111 processes a signal received as an electric signal from the control unit 133, the LSI 103 converts it into an optical signal by means of the light emitting diode 102 and then outputs it to the LSI on other substrate 100 or 111. The electric signal is sent or received from the control unit 133 through the copper bumps 124 and the signal lines 116 , 117 on the substrate 10.

Accordingly, by making the constructions of the substrates 100, 111 and 112 same as the constructions of the Fig. 1, the present system operates as the information processing apparatus of the first embodiment. A difference lies in that an optical signal of the optical waveguide 14 is deflected upward by the aluminum film 13 and entered into the photodetector 101 on the substrate 100, 111 or 112, and light emitted from the light emitting element 102 on the substrate 100, 111 or 112 is deflected downward by the aluminum film 13 and propagated through the optical waveguide 14.

Here, a manufacturing method of the information processing apparatus of the second embodiment will be described.

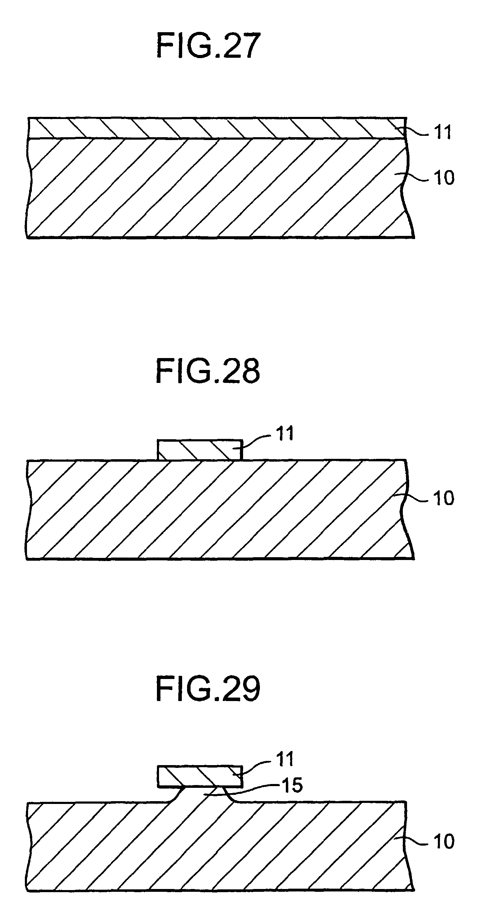

First, as shown in Fig. 27, a resist film 11 of about 1 µm in thickness is formed on a silicon substrate 10. In detail, the resist film 11 is formed by spreading a photosensitive resin solution with viscosity of 20 cp (OFPR-800 made by Tokyo Ohka Kogyo Co., Ltd.) at 1500 rpm for 2 seconds and then at 3000 rpm for 30 seconds using a spinner, and thereafter by curing it. Thereafter, patterning by exposure and development produce a shape such as shown in Fig. 28. As a developer, one (NMD-3 made by Tokyo Ohka Kogyo., Ltd.) containing 2.38 % of tetramethylammonium hydroxide is used.

Next, the resist film 11 is used as a mask in etching the silicon substrate 10 by means of an etchant for isotropic etching, so as to form a salient 15 of about 0.5 µm in height (Fig. 29). As the etchant, the present embodiment uses a mixture of HNO₃ and HF in the ratio of HNO₃/HF = 95/5. Carrying out such isotropic etching, etching proceeds in the horizontal direction as well as thicknesswise direction in the silicon substrate 10. Accordingly, the etchant goes round to the part under the resist film 11 to produce an undercut. Owing to this, it is possible to make the side face of the salient 15 be formed as an inclined surface of a suitable angle for a mirror suface.

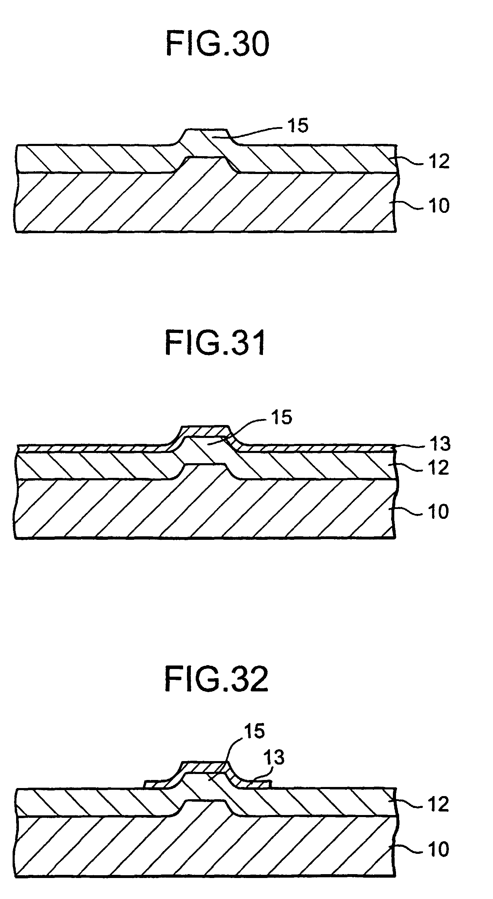

After that, the resist film 11 is removed, and the whole surface of the silicon substrate 10 is subjected to thermal oxidation at 1100°C for 6 hours, to form an oxide film of about 1.2 µm in thickness (Fig. 30). This can form an oxide film that is along the above-mentioned salient 15 in shape. This oxide film becomes a lower clad 12. Further, on the lower clad 12, an aluminum film 13 of 0.2 µm in thickness is formed by sputter deposition (Fig. 31). This aluminum film 13 is removed by photolithography, leaving the part that covers the inclined surfaces of the salient 15. By this, a micro mirror can be made of the aluminum film 13 (Fig. 32).

Next, after forming a resist film on the lower clad 12, the lines 113, 114, 115, 116 and 117, the aluminum pads 122, and the connecting pads 113a, 114a, 115a, 116a and 117a are formed of aluminum films of 0.8 µm in thickness, by the lift-off technology. Further, all over the surface of the substrate 10, PIX-1400 made by Hitachi Chemical Co., Ltd. is coated and baked, in order to form a protective coat 140 of polyimide all over the surface. Thereafter, the protective coat is removed by dry etching from the area in which the optical waveguide 14 is to be formed and from the areas of the aluminum pads 122 and the connecting pads 113a, etc.

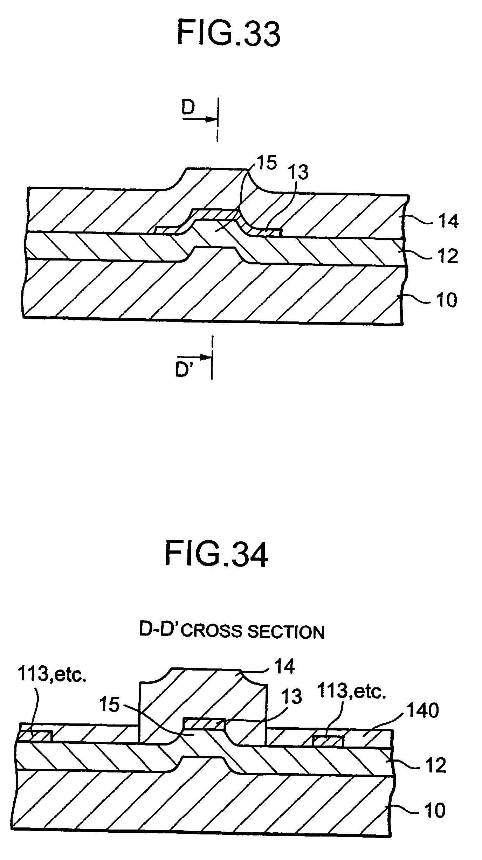

Next, a very thin coat of an organic zirconium compound is formed on the order of molecule in thickness on the surface of the lower clad 12 in the area in which the optical waveguide 14 is to be formed. Such coat of organic zirconium compound is formed to improve adhesion strength between the optical waveguide 14 of polyimide and the lower clad 12. Then, after OPI-N3505 made by Hitachi Chemical Co., Ltd. is coated and baked to form a polyimide layer of a desired thickness, dry etching is carried out to etch it into the shape of a ridge-type waveguide, so that the optical waveguide 14 of polymide is formed, as shown in Figs. 33 and 34.

Next, after deposition of a chromium film 123 on the aluminum pads 122, the copper bumps 124 of 30 µm in height are formed by plating. Then, the substrates 100, 111 and 112, which have been fabricated separately, are fixed while being aligned with the substrate 10 using transmitted infrared ray, by forming an electrically conductive adhesive layer 142 of silver paste. Liquid of resin raw material is dropped into the spaces between the substrate 10 and the fixed substrates 100, 111 and 112, injected into them utilizing the capillary phenomenon, heated for curing, so as to form the resin 201. As the resin raw material, liquid obtained by mixing 100 parts by weight of glycidyl methacrylate and 1 part by weight of azobisisobutyronitrile can be used. In the case of this resin raw material, heating at 100°C for 30 minutes for curing can lead to formation of the resin 201. Further in the case of the constructions of Figs. 45 and 46, after forming the copper bumps 124 on the substrate 10, the resin 201 can be formed by a method such that, for example, a room temperature curing two-part epoxy adhesive is dropped into the space portiion in the periphery between the substrates (the portion of the resin 201 in Figs. 45 and 46), and cured at room temperature a whole day and night. Further, in the construction of Fig. 26, resin raw material is piled up in the positions of the resin 201 on the substrate 10, and the substrate 100, 111 and 112 are adhered with the the electrically conductive adhesive layer 142, while those substrates being aligned. Thereafter, curing leads to formation of the resin 201.

Further, the resin 201 in the construction of Fig. 23 can be formed by another method than the above-described ones. For example, as in the case of the resin 201 of Fig. 45, the periphery of the substrate 100 or the like is sealed with an epoxy adhesive or the like, except for a portion that becomes a sealing port later. Thereafter, the inside space is lightly evacuated through the sealing port, to fill a liquid mixture of 100 parts by weight of glycidyl methacrylate and 1 part by weight of azobisisobutyronitrile into the space through the sealing port, utilizing vacuum. Then, it is cured at 100°C for 30 minutes. This method can also form the resin 201 of the construction of Fig. 23.

The above-described manufacturing method are advantageous in that the processes of deposition and lithography for making the lines 113, etc. can be carried out continuously to the process of the deposition and lithography for the other aluminum films 13, etc.

Further, according to the above-described manufacturing methods, utilization of the under-etching by isotropic etching can easily form a salient having inclined surfaces suited for a micro mirror, with the metal film is covered on it. Thus, the optical waveguide 14 provided with a micro mirror can be easily manufactured. Further, the shape of the formed salient can be controlled by changing etching conditions for the isotropic etching. Thus, it is possible to manufacture a micro mirror that deflects light in a desired diredction, by controlling an angle of an inclined surface of the salient in accordance with, for example, a mode of the light propagation through the optical waveguide.

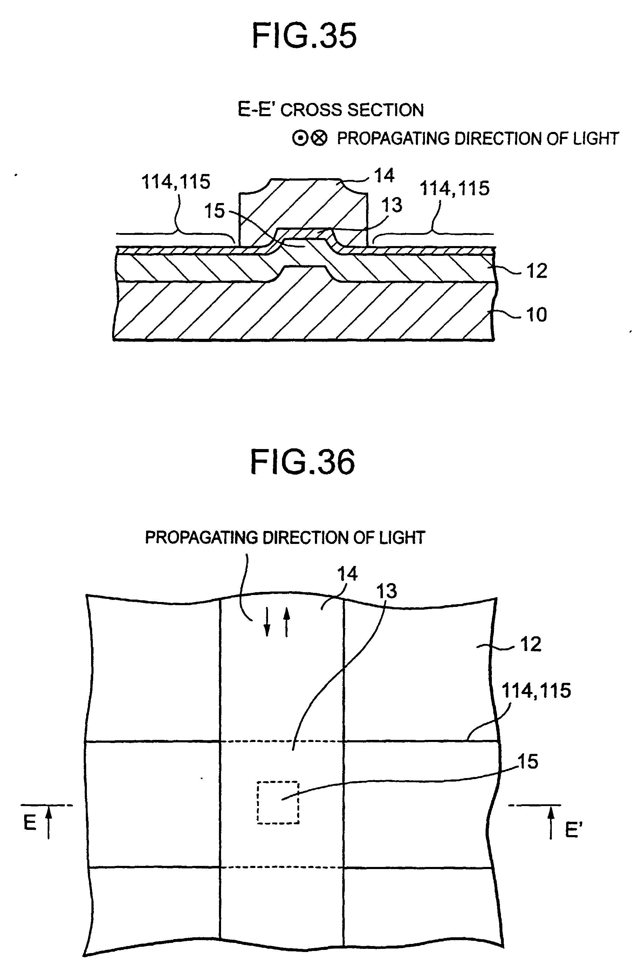

Further, in the above-described manufacturing methods, the aluminum film 13 constituting the micro mirror and the aluminum film constituting the lines 113, etc. are formed in the respective processes, separately. However, those two aluminum films may be formed in one process. In detail, after the aluminum film 13 is formed in the process of Fig. 31, and when the aluminum film 13 is subjected to lithography in the process of Fig. 32, patterning is carried out at the same time for making the shape of the micro mirror and for making the shapes of the lines 113, etc. This can simplify the manufacturing processes. Further, at that time, by carrying out patterning as shown in Figs. 35 and 36, the micro mirror can be a part of the line 113. In that case, the micro mirror can be utilized as a part 140 crossing the optical waveguide 14 (Figs. 21 and 22), and accordingly, places 140 at which the lines 113, etc. cross the optical waveguide 14 can be reduced, so that propagation loss of the optical waveguide 14 can be reduced.

Here, the present embodiment uses the aluminum film for making the micro mirror and the lines. However, of course, other metal such as Cr, Cu, Au or Ag, for example, may be used. Further, other than the metal film, a dielectric film that reflects the propagated light may be used.

Further, in the above-described embodiment, thermal oxidation is employed to form the oxide film that makes the lower clad 12. However, sputtering, etc. may be employed to form an SiO₂ film or the like on the substrate 10. The formed film serves as the lower clad 12. In that case, a thick lower clad 12 can be easily formed.

Further, in the above-embodiments, the salient 15 is formed on the surface of the substrate 10, and then, the lower clad 12 is formed to be along it in shape, so that the salient 15 is formed on the surface of the lower clad 12. However, without being limited to this method, a salient may be directly formed on the surface of the lower clad 12 by forming the lower clad 12 on a flat substrate 10 and thereafter subjecting the surface of the lower clad 12 to isotropic etching.

As another method of manufacturing a micro mirror, it is possible to carry out isotropic etching on a metal film. This will be described in the following.

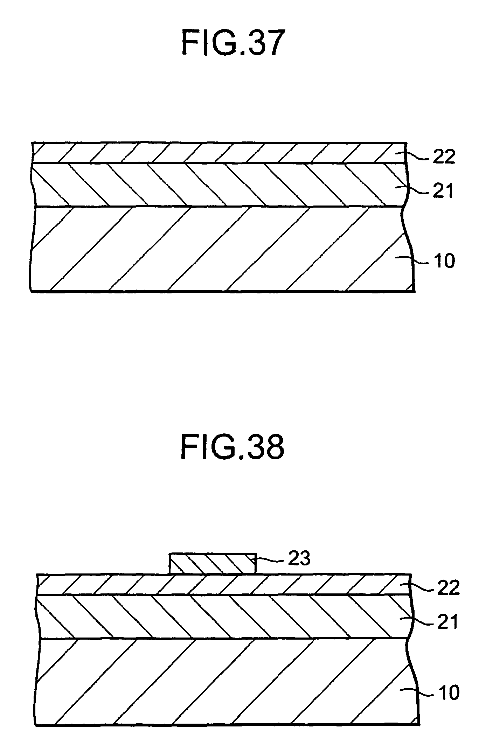

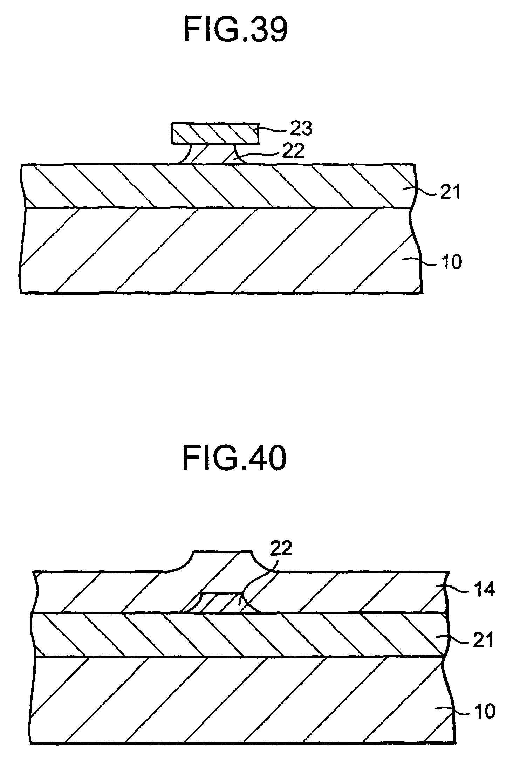

First, an SiO₂ film is deposited on the silicon substrate 10 to form the lower clad 21, and then, an aluminum film 22 is deposited further (Fig. 37). On this film, a resist film 23 is formed and subjected to patterning (Fig. 38). This resist film 23 is used as a mask for carrying out etching of the aluminum film 22 using an etchant for isotropic etching. Then, also the portion under the resist film 23 is etched to cause undercut-etching, and thus, a micro mirror of a convex-shaped aluminum film 22 having inclined surfaces can be formed (Fig. 39). Thereafter, employing the method similar to the above-described embodiments, the lines 113, etc. are formed, and then, the protective coat 140 is formed. Thereafter, the coat of an organic zirconium compound is formed on the surface of the lower clad 21, to form the optical waveguide 14 of polyimide (fig. 40).

This method can carry out isotropic etching directly on the aluminum film 22, and accordingly, it is possible to make the lower clad 21 flat, and to improve the propagation efficiency of the optical waveguide 14.

Further, since the lower clad 21 is flat in this method, the lower clad 21 may be formed of an organic resin such as polyimide.

Next, as another method of manufacturing a micro mirror, a method utilizing anisotropic etching will be described.

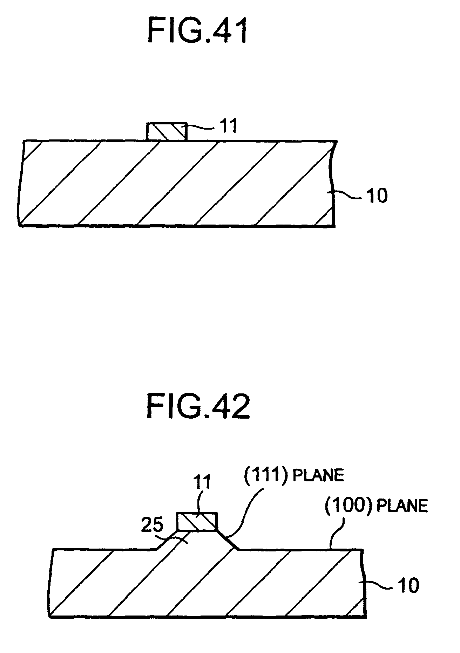

Although the manufacturing method according to the present embodiment is almost similar to the first embodiment, it uses a silicon substrate 10 having a (100) plane as its surface. When such a substrate 10 is used, a resist film 11 is formed as shown in Fig. 41, and potassium hydroxide solution is used as an etchant, then, it is possible to form a salient 25 having inclined surfaces of (111) planes as its side faces, utilizing the charactristic that the etching rate of the (111) plane of the silicon crystal is much slower than the etching rate of the (100) plane (Fig. 42). The processes thereafter are similar to those of Figs. 30 - 33.

According to this method, the angle of the (111) plane as the inclined surface is accurately decided as 54.7° with the (100) plane of the substrate surface, and accordingly, it is possible to eliminate dispersion of the inclined surface of the micro mirror. Thus, by having designed the mode of the optical waveguide 14, it is possible to deflect light in a desired direction with better accuracy.

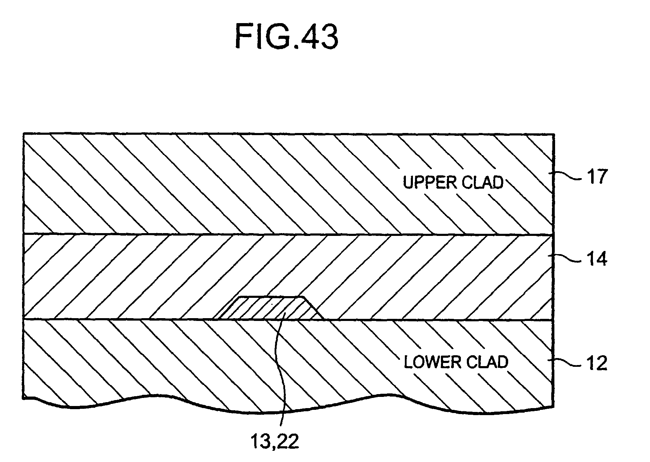

The above-described optical waveguide of the present embodiment is constructed to utilize air as an upper clad. However, as shown in Fig. 43, the waveguide may be constructed to have an upper clad 17. As the upper clad 17, may be used an SiO₂ film formed by sputtering or the like or a layer of organic resin such as a polyimide layer formed by coating OPI-N1005 made by Hitachi Chemical Co., Ltd. and baking it.

In each of the above-described embodiments, the convex-shaped micro mirror is formed under the optical waveguide 14, and accordingly, also the optical waveguide 14 becomes convex at the position of the micro mirror. Thus, by abrading the upper surface of the optical waveguide 14, it is possible to form a waveguide 14 that is flat in its upper surface, as shown in Fig. 43. In that case, there is effect that propagation loss of the optical waveguide 14 can be decreased.

The above-described embodiments employ wet etching as the isotropic etching. However, the present invention is not limited to the wet etching, and dry etching can be employed on the conditions that isotropic etching can be carried out to cause undercut etching.

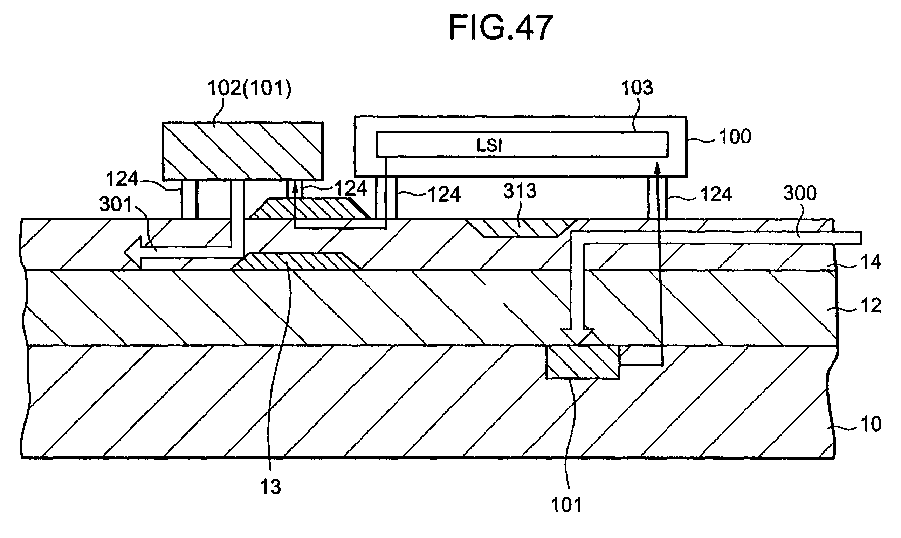

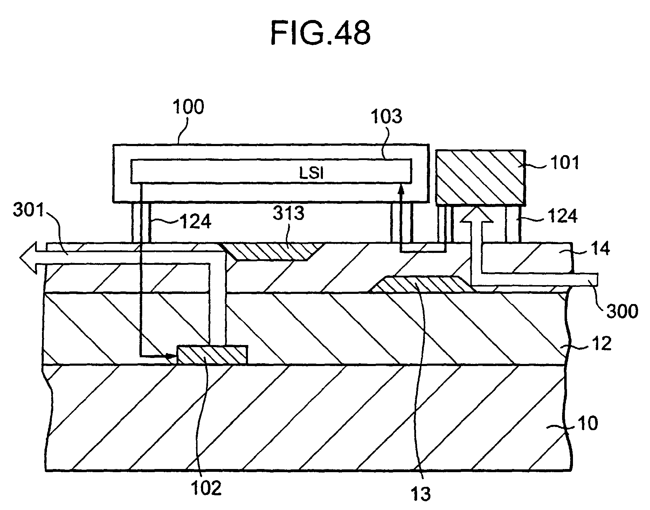

The above-described first embodiment has the construction that the photodetectors 101 and the light emitting elements 102 are arranged on the substrate 10 under the optical waveguide 14. The second embodiment has the construction that the photodetectors 101 and the light emitting elements 102 are arranged on the substrates 100, 111 and 112 mounted above the optical waveguide 14. However, the present invention is not limited to these constructions. For example, as shown in Fig. 47, it is possible to employ construction in which only the photodetectors 101 are arranged on the substrate 10 under the optical waveguide 14, while the light emitting elements 102 are arranged above the optical waveguide 14. Further, as shown in Fig. 48, it is possible to employ construction in which the light emitting elements are arranged on the substrate 10 under the optical waveguide 14, while the photodetectors 101 are arranged above the optical waveguide. In the cases of Figs. 47 and 48, both the micro mirror constituted by the aluminum film 313 and the micro mirror constituted by the aluminum film 13 are arranged. Further, delivery of an electric signal by the photodetector 101 that is arranged above the optical waveguide 14 and has received the signal in the form of light and delivery of the power-supply voltage to the light emitting element 102 are carried out through the copper bumps 124 that fixes the photodetector 101 and the light emitting element 102 on the substrate 10. Or, the photodetector 101 and the light emitting element 102 may be mounted on the substrate 100 as in the second embodiment, and delivery of the power-supply voltage or an electric signal may be carried out through the copper bumps 124 that fixes the substrate 100.

In the above-described first and second embodiments, supply of the power-supply voltage, etc. to the LSI substrates 100, 111 and 112 is carried out through the lines 113, etc. provided on the substrate 10 and the copper bumps for supporting the LSI substrates 100, etc. Owing to this construction, power supply to the substrates 100, 111, 112, etc. can be carried out from the side of the undersurface, similarly to a flip chip. Therefore, it is not necessary to provide wiring and terminals on the upper surface sides of the substrates 100, 111 and 112. Further, fixing of the substrates 100, 111 and 112 on the substrate 10 and electric connection can be realized at the same time by means of the copper bumps. Thus, the manufacturing processes can be simplified.

Further, in the first and second embodiments, the copper bumps 124 are used to connect the substrate 10 and the substrates 100, 111 and 112 mounted on it. However, other material than the copper bumps 124 may be used if it is electrically conductive and can support the substrates 100, 111 and 112. For example, bumps of other metal such as solder, or an anisotropic conductive adhesive may be used. When solder bumps are used, the substrates 100, 111 and 112 can be adhered by melting the solder bumps without using an adhesive layer 142. The solder bumps are not formed by plating, but bumps that have been formed into spherical shapes in advance may be used instead. An anisotropic conductive adhesive is obtained by mixing and dispersing conductive particles into an adhesive resin components (for example, epoxy resin, acrylic rubber, and a latent hardener), and it becomes electrically conductive at a pressed portion, owing to contact of the conductive particles, and insulating at a non-pressed portion. Thus, pressing at the time of mounting the substrates 100, 111 and 112 can realize adhesion and conduction at the same time. As the conductive particles of the anisotropic conductive adhesive, metal particles such as Au, Ag, Cu, solder, or the like may be used for example, or particles obtained by providing a conductive layer such as Ni, Cu, Au, solder, or the like to spherical core material of polymer such as polystyrene may be used. As a ratio of the conductive particles to 100 parts by volume of the adhesive resin components, 0.3 - 30 parts by volume is desirable. Further, also, the anisotropic conductive adhesive may be used in the form of a film that has been formed in advance.

Further, the characteristic of the anisotropic conductive adhesive, i.e. the characteristic that the material becomes electrically conductive at pressed portions owing to contact between the conductive particles and non-pressed portions are insulating, may be utilized as follows. Namely, in the constructions of Figs. 3 and 23, when the anisotropic conductive adhesive is used as the resin 201, then conduction between the aluminum pads 121, 122 can be realized by means of the anisotropic conductive adhesive instead of the copper bumps 124. In that case, the copper bumps 124 are not formed, and the substrate 10 and the substrates 100, 111 and 112 are adhered using the anisotropic conductive adhesive, so that the portion corresponding to the resin 201 and the portions corresponding to the copper bumps 124 are filled with the anisotropic conductive adhesive. Then, the anisotropic conductive adhesive between the aluminum pads 121 and the aluminum pads 122 are pressed, to make only those portions be electrically conductive. By this, only the portions between the aluminum pads 121 and 122 becomes conductive, and the other portions are kept insulating. Thus, the construction that does not have a copper bump 124 can realize both resin sealing and conductivity between the lines.

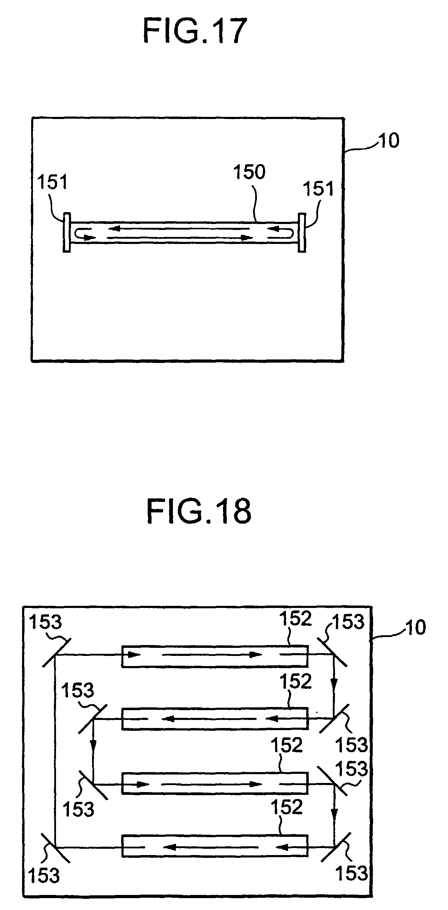

Further, the first and second embodiments have the ring-shaped optical waveguide 14 in order to circulate an optical signal. However, another shape of the optical waveguide than the ring-shape may be employed as long as it has a structure in which light circulates. For example, as shown in Fig 17, it is possible to employ structure in which mirros 151 are arranged at both ends of one linear optical waveguide 150, and propagated light is circulated being turned at the mirrors 151, and thus, reciprocating in the optical waveguide 150. Further, as shown in Fig. 18, linear optical waveguides 152 may be arranged in parallel and mirrors 153 are arranged at respective end surfaces of the optical waveguides. According to this construction of Fig. 18, it is repeated that light propagated through an optical waveguide 152 is emitted from its end surface, and turned by a mirror 153 to enter into an end surface of the next optical waveguide 152. As a result of this repeating, light is circulated. According to the constructions of Figs. 17 and 18, the optical waveguides 150, 151 can be simply manufactured, since the optical waveguides 150, 152 are linear in shape. Further, according to the construction of Fig. 18, it is possible to arrange the optical waveguides whose length in total is larger, on the substrate 10 of a small area. Accordingly, that construction is suitable for the case in which many LSI substrates should be efficiently arranged.

As the resin 201 used for filling the spaces between the substrate 10 and the substrates 100, etc. in the first and second embodiments, the following may be used.

Examples of the resin 201 that can be used include polyalkylene-type resin, polystyrene-type resin, vinyl-type resin, vinylidene-type resin, acrylic-type resin, thermoplastic polyurethane, acetal resin, polycarbonate, fluororesin, silicone resin, polyamide-type resin, polyimide-type resin, PPO resin (polyphenylene oxide), Noryl resin, polysulfone, polydiphenyl ether, polyether, polyurea resin, polyethylene oxide, polybisdiene resin, polyparaphenylether, polythiazole, polyoxythiazole, polytriazole, TPX resin (4-methylpentene-1 resin), phenoxy resin, synthetic rubber, ionomer, sugar chain, polypeptide, etc., and derivatives or copolymer of these materials. Examples of the thermosetting resin include phenolic resin, urea resin, melamine resin, xylene resin, furan resin, diallyl phthalate resin, polyester, alkyd resin, epoxy resin, aniline resin, polyurethane, polyimide, alkylbenzene resin, guanamine resin, and the like. Example of polyester and alkyd resin include unsaturated polyester, glyptal-type resin, isophthalate-type resin, terephthalate resin, aliphatic polyester, polycarbonate, and the like. Examples of the polyalkylene resin include polypropylene, polyethylene, ethylene-vinyl acetate copolymer resin, ethylene-ethyl acrylate copolymer resin, and the like. The polystyrene-type resin means polystyrene and its copolymer resin, the examples including polystyrene, ABS resin (acrylonitrile-butadiene-styrene copolymer resin), ASA resin (acrylonitrile-styrene-acrylate copolymer resin), chain polyester, AS resin (acrylonitrile-styrene copolymer resin), ACS resin (acrylonitrile-vinyl chloride-styrene copolymer resin), and the like. Examples of the synthetic rubber include butadiene-type synthetic rubber, olefin-type synthetic rubber, polysulfide-type synthetic rubber, and the like. Examples of the vinyl-type resin include vinyl acetate resin, polyvinyl chloride resin, vinyl acetate-chloride resin, polyvinyl alcohol, polyvinyl formal, polyvinyl aceto acetal, polyvinyl butyral, polyvinyl ether, polyvinyl cinnamate, polyvinyl acetal, and the like. In addition, examples of the vinyl resin include copolymer resin with vinyl-type resin, vinylidene-type resin, acrylonitrile resin, ethylene-type resin, acrylic-type resin, styrene-type resin, or the like. Examples of such resin include, vinyl chloride-vinyl acetate copolymer resin, vinyl chloride-vinylidene chloride copolymer resin, vinyl chloride-acrylonitrile copolymer resin, ethylene-vinyl chloride copolymer resin, vinyl chloride-ester acrylate copolymer resin, vinyl chloride-ester methacrylate copolymer resin, propylene-vinyl chloride copolymer resin, and the like. Examples of the vinylidene-type resin include vinylidene chloride resin, vinylidene fluoride resin, and the like. The acrylic-type resin is polymers of ester methacrylate or ester acrylate, and examples of the ester methacrylate and ester acrylate include methyl ester such as methyl methacrylate, as well as ethyl ester, n-propylester, isopropylester, butyl ester, and the like.

Here, the glycidyl methacrylate used in the above embodiment is a kind of ester methacrylate.

Examples of the polyamide resin include various nylons, polyamic acid, polyamide-imide, amide-epoxy resin, and the like. Examples of the various nylons include nylon 6, nylon 8, nylon 11, nylon 66, nylon 610, and the like. Examples of polyimide-type resin include polyimide, polyamideimide, polybenzimidazole, polyetherimide, polyesterimide, polyisoimide, and the like. The polyamic acid can be used being converted into polyimide or polyisoimide by a publicly known method, which are examples of polyimide, polyesterimide and polyisoimide.

Examples of the fluororesin include polytetrafluoroethylene, polytrifluorochloroethylene, polyvinylidene fluoride, and the like. The silicone resin includes silicone resin that has a silane chain, and silicone resin that has a siloxane chain. These are classified, depending on material used, into polymers having chain structure and polymers having network structure. As an example having the siloxane chain, may be mentioned polydimethylsiloxane, and the like.

The ionomer is a network-bonding structured polymer, in which the bridges having metal ions etc. combine the polymers containing an organic acid group such as a caboxyl group in a side-chain.

As the sugar chain, may be mentioned-type resin, alginic acid, and the like.

As the celluloseic-type resin, may be mentioned cellulose, cellulose ester, and cellulose ether. As the cellulose ester, may be mentioned cellulose nitrate, acetyl cellulose, cellulose acetate butylate, and the like. As the cellulose ether, may be mentioned methyl cellulose, ethyl cellulose, cellulose ester, cellulose ether, and the like.

The polypeptide is polymer material produced by condensation of amino acids, and examples of polypeptide include natural protein such as wool protein, silk protein, casein, soybean protein, and the like, as well as compounds obtained by condensation from various amino acids as raw materials.

As the resin 201, may be used photosensitive resin. Examples of the photosensitive resin include azido-type photosensitive resin, diazo-type photosensitive resin, cinnamate-type photosensitive resin, photo-polymerization-type photosensitive resin, photosensitive polyimide, and the like, of which two or more may be used together. Example of the cinnamate-type photosensitive resin include polycinnamic acid vinyl, polyvinyl cinnamylideneacetic acid, phenoxy cinnamylideneacetic acid, phenoxy-α-cyanocinnamylideneacetic acid, p-phenylenediacrylate-type photosensitive polyester, and the like. Examples of the photo-polymerization-type resin include: acrylazides; acrylates such as 2-ethyl-hydroxymethacrylate, polyethylene glycol monomethacrylate, polyethylene glycol dimethacrylate, pentaerythritol tetracrylate, ethylene oxide bisphenol A diarylate, and the like; vinyl monomers; vinyl oligomers; unsaturated polyester resin; and the like.

Sealing of the spaces between the substrate 10 and the substrates 100, etc. by means of the resin 201 in the present embodiment can be carried out, by causing photo-curing reaction using resin (implying also its raw material, precursor, and the like) that includes a photocurable unit.

As examples of the photocurable unit, may be mentioned acryloyl group, methacryloyl group, azido group. chloromethyl group, maleimide group, epoxy group, cinnamic acid derivatives, thymine derivatives, and the like. Two or more of them may be used together. Further, various photosensitive resins may be used as the resin including a photocurable unit. If necessary, an intensifier and the like may be used together.

Sealing of the spaces between the substrate 10 and the substrates 100, etc. by means of the resin 201 in the first and second embodiments can be carried out by causing thermosetting reaction, using resin (implying also its raw material, precursor, and the like) that includes a unit that is heat-curable.

Examples of the heat-curable unit include acryloyl group, methacryloyl group, azido group, chloromethyl group, maleimide group, epoxy group, phenolic resin, and the like. Two or more of them may be used together. Further, thermosetting resin may be used as the resin including a heat-curable unit. If necessary, a hardener and an initiator may be used together.

Glycidyl methacrylate used in the first and second embodiments is an example of the resin including the heat-curable unit. Glycidyl methacrylate is a raw material for resin having methacryloyl groups and epoxy groups. Further, azobisisobutyronitrile is an example of the initiator.

Sealing of the spaces between the substrate 10 and the substrates 100, etc. by means of the resin 201 in the first and second embodiments can be realized by using resin having a reactive functional group.

Example of the reactive functional group include acryloyl group, methacryloyl group, azido group, chloromethyl group, maleimide group, epoxy group, cinnamic acid derivatives, thymine derivatives, phenolic hydroxyl group, thiol group, alkenyl group, double bond group, formyl group, acetal group, isocyanate group, cyano group, amine group, amide group, halogen group, isoimide group, amic acids, hydroxyl group, carboxyl group, ester group, cinnamylidene group, diazo group, dithiocarbamate group, quinone group, quinone dioxime group, acid anhydride group, silanol group, acetoxysilane group, alkoxysilane group, ketoximesilane group, aminosilane group, aminoxysilane group, silazane group, amidesilane group, titanate group, and the like.

As the construction of the resin having reactive functional groups, may be mentioned construction in which each reactive functional group is bonded to resin by means of a connecting group. As such connecting group, may be mentioned direct bond, ether group, ester group, amide group, alkylene group, arylene group, silylene group, silyloxy group, and the like.

Example of the arylene group include benzene, naphthalene, biphenyl, thiophene, benzo[*b*]thiophene, naphto[2, 3-b]thiophene, thianthrene, furan, pyran, benzo[*b*]furan, isobenzofuran, chromene, xanthene, phenoxazine, 2H-pyrrole, pyrrole, imidazole, pyrazole, pyridine, pyrazine, pyrimidine, pyridazine, indolizine, isoindole, 3H-indole, indole, 1H-indazole, purine, 4H-quinolizine, isoquinoline, quinoline, phthalazine, naphthyridine, quinoxaline, quinazoline, cinnoline, pteridine, 4aH-carbazolyl, carbazole, β-carboline, phenanthridine, acridine, perimidine, phenanthroline, phenazine, phenarsazine, isothiazole, phenothiazine, isoxazole, furazan, phenoxazine, isochroman, chroman, pyrrolidine, pyrroline, imidazolidine, imidazoline, pyrazolidine, pyrazoline, piperidine, piperazine, indoline, isoindolin, quinuclidine, morpholine, and the like. Further, their substitution products and positional isomers are included.

As alkane that gives alkylene group, may be mentioned methane, ethane, propane, butane, pentane, hexane, heptane, octane, nonane, decane, undecane, dodecane, and the like. Further, their structural isomers, substitution products, and position isomers are included.

For the sealing of the spaces between the substrate 10 and the substrates 100, etc. by means of the resin 201 in the first and second embodiments, various resins added with a compound having a reactive functional group may be used.

As the compound having a reactive functional group, may be used a compound having structure that a reactive functional group is bonded to a skeleton molecule by means of a connecting group. One or a plurality of reactive functional groups may be bonded. As the reactive functional group and the connecting group, the above-described ones may be used.

The skeleton molecule may be aromatic ring, aliphatic ring, chain carbon, chain silicon, or siloxane chain. The skeleton molecule may have structure that one or a plurality of same and/or different aromatic rings and aliphatic rings are bonded with one another by means of connecting groups. The skeleton molecule may have structure that one or a plurality of same and/or different aromatic rings and aliphatic rings are fused with one another.

Examples of the aromatic ring include benzene, naphthalene, biphenyl, thiophene, benzo[*b*]thiophene, naphto[2, 3-b]thiophene, thianthrene, furan, pyran, benzo[*b*]furan, isobenzofuran, chromene, xanthene, phenoxathiin, 2H-pyrrole, pyrrole, imidazole, pyrazole, pyridine, pyrazine, pyrimidine, pyridazine, indolizine, isoindole, 3H-indole, indole, 1H-indazole, purine, 4H-quinolizine, isoquinoline, quinoline, phthalazine, naphthyridine, quinoxaline, quinazoline, cinnoline, pteridine, 4aH-carbazolyl, carbazole, β-carboline, phenanthridine, acridine, perimidine, phenanthroline, phenazine, phenarsazine, isothiazole, phenothiazine, isoxazole, furazan, phenoxazine, isochroman, chroman, pyrrolidine, pyrroline, imidazolidine, imidazoline, pyrazolidine, pyrazoline, piperidine, piperazine, indoline, isoindolin, quinuclidine, morpholine, and the like. Further, their substitution products and positional isomers are included.

Examples of the aliphatic ring include ones obtained by hydrogenation of one or all of the unsaturated bonds of the above-described aromatic rings, and may be mentioned cyclopropane, cyclobutane, cyclopentane, tetrahydrofuran, cyclohexane, cycloheptane, cyclooctane, methyl cyclopentane, dimethylcyclopentane, methylcyclohexane, norbornane, bicyclo[2. 2. 2]octane, nortricyclene, cubane, basketene, adamantane, spiro[3. 3]heptane, decalin, cyclopentene, cyclohexene, 1,2-dimethylcyclopentene, 5-methyl-1,3-cyclohexadiene, and the like. Further, their substitution products and positional isomers are included. The chain carbon, chain silicon and siloxane chain may have one or a plurality of branched chains. It is preferable that the number of chemical elements constituting a principal chain is 1 - 20. One or a plurality of double bonds and/or triple bonds may be included.

For example, may be mentioned alkane, alkene, and alkyne, including their substitution products and positional isomers. Examples of the alkane include methane, ethane, propane, n-butane, isobutane, pentane, hexane, heptane, octane, nonane, decane, undecane, dodecane, tetradecane, hexadecane, octadecane, eicosane, and the like. Examples of the alkene include ethene, propene, 1-butene, 2-butene, 2-methylpropene, 3,3-dimethyl-1-butene, 4-methyl-2-pentene, 1,3-butadiene, (2E, 4E)-2,4-hexadiene, and the like.

Examples of the alkyne include acetylene, propyne, 1-butyne, 1-pentyne, 1-hexyne, 2-hexyne, 3-hexyne, 1-heptyne, 1-octyne, 1-nonyne, 5-decyne, and the like.

When resin is selected as the resin 201 used in the first and second embodiments, it is preferable to consider the following characteristics.

In order that a refractive index of the resin does not injure the function of the optical waveguide, the resin is selected taking refractive indexes of the core material and the clad material into consideration. Further, the resin is selected not to disturb a photodetector in receiving light deflected by a mirror, or the like. Further, the resin is selected in order that light emitted from a light emitting element is efficiently propagated into the optical waveguide substrate.

Further, as the resin, it is possible to use resin whose glass transition point is 80°C or more (preferably 100°C or more, more preferably 130°C or more, and most preferably 150°C or more).

In the case of the construction where light permeates the sealing resin, it is preferable to use resin whose light absorption is smaller in the wavelength range of the light used.

In the case of using the resin accompanied by a reaction such as curing, it is preferable to select resin whose volumetric shrinkage in the reaction is smaller.

As described above, according to the first embodiment, it is possible to provide an optical information processing apparatus that converts input/output signals of an electric circuit into optical signals in light receiving/emitting elements and transmits the converted signals through an optical waveguide, wherein alignment between the optical waveguide and the light receiving/emitting elements is easy.

Further, according to the second embodiment, it is possible to provide an optical information processing apparatus in which an optical waveguide substrate is mounted with a substrate formed with an electric circuit and light receiving/emitting elements, wherein those substrates can be strongly fixed to each other and reliability of the apparatus is improved.

### Industrial Applicability

As described above, the optical information processing apparatus according to the present invention is advantageous in that the optical waveguide and the light receiving/emitting elements can easily be aligned.

## Claims

1. An optical information processing apparatus comprising:
a waveguide substrate provided with an optical waveguide;
an electric circuit substrate mounted on said waveguide substrate such that said electric circuit substrate is opposed to said optical waveguide;
a photodetector for receiving light propagated through said optical waveguide arranged under said optical waveguide; and
an electric circuit of said electric circuit substrate connected to said photodetector.

2. The optical information processing apparatus according to Claim 1, wherein:
said optical waveguide is provided with a deflecting means for deflecting a part of said propagated light toward said photodetector.

3. The optical information processing apparatus according to Claim 1, wherein:
propagation efficiency of said optical waveguide is changed at a position above said photodetector in order that a part of said propagated light is made to enter said photodetector.

4. The optical information processing apparatus according to Claim 1, wherein:
said optical waveguide is provided with means for scattering a part of said propagated light in order that said part of the propagated light is made to enter said photodetector.

5. The optical information processing apparatus according to Claim 2, wherein:
said deflecting means is a mirror that reflects propagated light.

6. The optical information processing apparatus according to Claim 5, wherein:
said mirror comprises a concave portion formed in an upper surface of said optical waveguide, and a reflecting film formed at least on an internal surface of said concave portion.

7. An optical information processing apparatus, comprising:
a waveguide substrate provided with an optical waveguide;
an electric circuit substrate mounted on said waveguide substrate such that said electric circuit substrate is opposed to said optical waveguide;
a light emitting element for emitting light to be propagated through said optical waveguide arranged under said optical waveguide; and
an electric circuit of said electric circuit substrate connected to said light emitting element.

8. An optical information processing system, comprising:
a substrate;
a ring-shaped optical waveguide arranged on said substrate for circulating an optical signal;
a plurality of electric circuits; and
one or more photodetectors and one or more light emitting elements, said photodetectors and light emitting elements being provided in order to connect said plurality of electric circuits to said ring-shaped optical waveguide;
wherein:
said one or more photodetectors and/or said one or more light emitting elements are arranged under said optical waveguide.

9. An optical information processing system, comprising:
a substrate;
a ring-shaped optical waveguide arranged on said substrate for circulating an optical signal;
one or more electric circuits of a first type;
one or more electric circuits of a second type;
pairs of photodetector and light emitting element, each of said electric circuits of the first type being connected to one of said pairs in order to connect said electric circuits of the first type to said ring-shaped optical waveguide; and
photodetectors or light emitting elements, each of said electric circuits of the second type being connected to one of said photodetectors or light emitting elements in order to connect said electric circuits of the second type to said ring-shaped optical waveguide;
werein:
at least one of said photodetectors and said light emitting elements is arranged under said optical waveguide.

10. An optical information processing system, comprising:
a substrate;
a ring-shaped optical waveguide arranged on said substrate for circulating an optical signal;
one or more electric circuits of a first type;
one or more electric circuits of a second type;
pairs of photodetector and light emitting element, each of said electric circuits of the first type being connected to one of said pairs in order to connect said electric circuits of the first type to said ring-shaped optical waveguide; and
photodetectors or light emitting elements, each of said electric circuits of the second type being connected to one of said photodetectors or light emitting elements in order to connect said electric circuits of the second type to said ring-shaped optical waveguide; werein
all of said pairs of photodetector and light emitting element connected to said electric circuits of the first type and all of said photodetectors or light emitting elements connected to said electric circuits of the second type are arranged under said optical waveguide.

11. An optical information processing apparatus, comprising:
a waveguide substrate provided with an optical waveguide; and
an electric circuit substrate mounted on said waveguide substrate such that said electric circuit substrate is opposed to said optical waveguide;
wherein:
said electric circuit substrate is provided with a photodetector, which is for receiving light propagated through said optical waveguide, and an electric circuit; and
at least a part of a space between said waveguide substrate and said electric circuit substrate is filled with resin.

12. The optical information processing apparatus according to Claim 11, wherein:
said resin fills only a space between said optical waveguide and said photodetector, thus, said resin serving also as a guide for light emitted from said optical waveguide toward said photodetector.

13. The optical information processing apparatus according to Claim 11, wherein:
said resin fills only a space between said waveguide substrate and said electric circuit substrate.

14. The optical information processing apparatus according to Claim 11, wherein:
said resin fills a space between said waveguide substrate and said electric circuit substrate, except for a space between said optical waveguide and said photodetector.

15. The optical information processing apparatus according to Claim 11, wherein:
said waveguide substrate is provided with a wiring pattern;
a part of said resin is electrically conductive; and
said photodetector and said electric circuit are electrically connected to said wiring pattern by means of said resin.
